# EUROPEAN PATENT APPLICATION

(11) **EP 4 701 041 A1**
(43) Date of publication of application: **25.02.2026**
(21) Application number: 24795885.3
(22) Date of filing: 15.04.2024
(51) Int. Cl.: H02J 15/00

(54) **ENERGY STORAGE VALVE SUB-MODULE, ENERGY STORAGE VALVE, AND ENERGY STORAGE STATION**

(30) Priority: 24.04.2023 CN 202310450716; 24.04.2023 CN 202310450776
(71) Applicant: Contemporary Amperex Future Energy Research Institute (Shanghai) Limited, Shanghai 200241 (CN); Contemporary Amperex Technology Co., Limited, Ningde, Fujian 352100 (CN)
(72) Inventor: XU, Xiangxiang, Shanghai 200241 (CN); LU, Yanhua, Shanghai 200241 (CN); YU, Dongxu, Shanghai 200241 (CN)
(74) Representative: Gong, Jinping
(86) International application number: PCT/CN2024/087745
(87) International publication number: WO 2024/222504

(57) **Abstract**

An energy storage valve submodule, an energy storage valve, and an energy storage station are provided, pertaining to the field of power electronics technologies. The energy storage valve submodule includes an energy storage module and a load; where the load is electrically connected to the energy storage module; and the load is further electrically connected to another energy storage valve submodule. This provides a plurality of power extraction methods, enhances reliability, and reduces the risk of over-discharge of the energy storage module.

## Description

This application claims priority to Chinese Patent Application No. 202310450776.2, filed with the China National Intellectual Property Administration on April 24, 2023, entitled "ENERGY STORAGE VALVE SUBMODULE, ENERGY STORAGE VALVE, AND ENERGY STORAGE STATION," and Chinese Patent Application No. 202310450716.0, filed with the China National Intellectual Property Administration on April 24, 2023, entitled "ENERGY STORAGE VALVE SUBMODULE, ENERGY STORAGE VALVE, AND ENERGY STORAGE STATION," which are incorporated herein by reference in their entireties.

### TECHNICAL FIELD

This application pertains to the field of power electronics technologies, and particularly relates to an energy storage valve submodule, an energy storage valve, and an energy storage station.

### BACKGROUND

As a flexible resource, an energy storage system can provide applications such as frequency regulation and peak shaving in all aspects of a power system, including generation, transmission, distribution, and consumption. It plays a crucial role in stabilizing grid frequency, alleviating grid congestion, and enhancing flexibility in power generation and consumption. In the field of energy storage technology for power systems, the cascaded energy storage system features modular design, high capacity utilization, high conversion efficiency, fast dynamic response, low harmonic content, and stable system operation. It has become a current research hotspot and holds broad application prospects.

The core component of the cascaded energy storage system is an energy storage valve submodule, which includes a power module and an energy storage module. Therefore, ensuring the safe and stable operation of the energy storage valve submodule is of great significance for the high reliability of the energy storage system and even the power system. Moreover, the power supply failure is a typical fault within the energy storage valve submodule. Existing energy storage valve submodules have a plurality of internal power extraction points and power supply specifications, often utilizing high-voltage busbars for power extraction, resulting in complex wiring that is prone to short-circuit faults. Additionally, the power extraction sources for internal power equipment in the energy storage valve submodule are singular.

Consequently, related energy storage valve submodules suffer from poor reliability and a single power extraction source.

### SUMMARY

In view of the aforementioned problems, this application provides an energy storage valve submodule, an energy storage valve, and an energy storage station, aimed at addressing the problems of poor reliability and singular power extraction sources in related energy storage valve submodules.

According to a first aspect, an embodiment of this application provides an energy storage valve submodule including an energy storage module and a load; where
the load is electrically connected to the energy storage module; and
the load is further electrically connected to another energy storage valve submodule.

In the technical solution of the embodiment of this application, since the load is electrically connected to the energy storage module, and the load is further connected to another energy storage valve submodule, the wiring is simplified, reliability is enhanced, a plurality of power extraction sources are achieved, and the likelihood of over-discharge of the energy storage module is reduced.

In some embodiments, the energy storage module is provided in one or plurality, where the plurality of energy storage modules are connected in series and/or in parallel.

By adopting the foregoing solution, the energy storage module is flexibly configured, broadening the application scope of the energy storage valve submodule.

In some embodiments, the energy storage valve submodule includes a first power conversion module; where
the first power conversion module is connected to the energy storage module via a main direct current bus, and the load is connected to the first power conversion module.

By adopting the foregoing solution, voltage conversion of a first direct current output from the main direct current bus is achieved, enhancing the compatibility of the energy storage valve submodule.

In some embodiments, the energy storage valve submodule further includes a first local direct current bus; where
the first local direct current bus is connected to the first power conversion module.

By adopting the foregoing solution, the first local direct current bus is provided to enable simultaneous power supply to a plurality of loads.

In some embodiments, the energy storage valve submodule further includes a first output direct current bus; where
the first output direct current bus is connected to the first power conversion module.

By adopting the foregoing solution, the first output direct current bus connected to the first power conversion module is provided to enable the second direct current output from the first power conversion module to be transmitted to the first output direct current bus to supply power to the load connected to the another energy storage valve submodule.

In some embodiments, the energy storage valve submodule further includes a first output direct current bus; where
the first output direct current bus is connected to a main direct current bus and another energy storage valve submodule.

By adopting the foregoing solution, the first output direct current bus connected to the main direct current bus is provided to enable the first direct current output from the main direct current bus to be transmitted to the first output direct current bus to supply power to the load connected to the another energy storage valve submodule.

In some embodiments, the energy storage valve submodule further includes a first standby direct current bus; and
the load is connected to another energy storage valve submodule via the first standby direct current bus.

By adopting the foregoing solution, the first standby direct current bus is provided to enable the reception of the first standby direct current output from the another energy storage valve submodule, thereby supplying power to the load.

In some embodiments, the first standby direct current bus is provided in plurality; where
the plurality of first standby direct current buses are connected to a plurality of another energy storage valve submodules and the load.

By adopting the foregoing solution, the plurality of first standby direct current buses are provided to enable the reception of a plurality of first standby direct currents output from the plurality of another energy storage valve submodules, thereby supplying power to the load and further enhancing the reliability of the energy storage valve submodule.

In some embodiments, the energy storage valve submodule further includes a first power module; where
the first power module is connected between the energy storage module and a power grid and is configured to perform charge-discharge switching for the energy storage module.

By adopting the foregoing solution, the first power module is provided to connect the energy storage valve submodule to the power grid, thereby enabling energy conversion between the energy storage module and the power grid.

In some embodiments, the energy storage valve submodule further includes a power supply module; where
the power supply module is connected between the load and the energy storage module; and/or
the power supply module is connected between the load and another energy storage valve submodule.

By adopting the foregoing solution, the power supply module is provided to convert a direct current supplied to the load, enhancing the compatibility of the energy storage valve submodule.

In some embodiments, the energy storage modules are disposed in respective electrical cabinets.

By adopting the foregoing solution, the energy storage modules are disposed in respective electrical cabinets, protecting the energy storage modules, extending their lifespans, and enhancing the reliability of the energy storage valve submodule.

In some embodiments, the first power conversion module is disposed in a busbar cabinet.

By adopting the foregoing solution, the first power conversion module is enabled to extract power in the busbar cabinet, reducing the number of power extraction points within the energy storage valve submodule, confining power extraction cables to the busbar cabinet, and reducing short-circuit incidents due to cable insulation failure, thereby enhancing the reliability and safety of the energy storage valve submodule.

In some embodiments, the energy storage valve submodule further includes a first preprocessing module; where
the first preprocessing module is connected between the first power conversion module and the main direct current bus, and the first preprocessing module is configured to perform interference suppression on a first direct current; and
the first power conversion module is specifically configured to perform voltage conversion on the interference-suppressed first direct current to output a stable second direct current.

By adopting the foregoing solution, spike voltages in the first direct current output from the main direct current bus are removed, enhancing the reliability and stability of the energy storage valve submodule.

In some embodiments, the energy storage valve submodule further includes:
a second power conversion module connected between the first power conversion module and the first output direct current bus, and configured to perform voltage conversion on the first standby direct current to output the converted first standby direct current to another energy storage valve submodule.

By adopting the foregoing solution, voltage conversion of the local first standby direct current is achieved, enhancing the compatibility of the energy storage valve submodule.

In some embodiments, the energy storage valve submodule further includes:
a second preprocessing module connected between the first power conversion module and the second power conversion module, and configured to perform interference suppression on the first standby direct current; where
the second power conversion module is specifically configured to perform voltage conversion on the interference-suppressed first standby direct current to output the converted first standby direct current to another energy storage valve submodule.

By adopting the foregoing solution, spike voltages in the local first standby direct current are removed, enhancing the reliability and stability of the energy storage valve submodule.

In some embodiments, the energy storage valve submodule further includes:
a third power conversion module connected between another energy storage valve submodule and the first standby direct current bus, configured to connect the first standby direct current output from another energy storage valve submodule, and perform voltage conversion on the first standby direct current output from the another energy storage valve submodule to output the converted first standby direct current from the another energy storage valve submodule to the first standby direct current bus.

By adopting the foregoing solution, voltage conversion of the first standby direct current output from the another energy storage valve submodule is achieved, enhancing the compatibility of the energy storage valve submodule.

In some embodiments, the energy storage valve submodule further includes:
a third preprocessing module, connected between another energy storage valve submodule and the third power conversion module, configured to connect the first standby direct current output from the another energy storage valve submodule, and perform interference suppression on the first standby direct current output from the another energy storage valve submodule; where
the third power conversion module is specifically configured to perform voltage conversion on the interference-suppressed first standby direct current output from the another energy storage valve submodule to output the converted first standby direct current from the another energy storage valve submodule to the first standby direct current bus.

By adopting the foregoing solution, spike voltages in the first standby direct current output from the another energy storage valve submodule are removed, enhancing the reliability and stability of the energy storage valve submodule.

According to some embodiments of this application, the energy storage module is provided in plurality, and the energy storage valve submodule further includes a plurality of first power conversion units; where
the plurality of energy storage modules are connected to the plurality of first power conversion units; and
the load is electrically connected to the plurality of first power conversion units.

By adopting the foregoing solution, since the load is electrically connected to the plurality of first power conversion units, and the load is further electrically connected to the another energy storage valve submodule, the wiring is simplified, reliability is enhanced, a plurality of power extraction sources are achieved, and the likelihood of over-discharge of the energy storage module is reduced. Moreover, since the power extraction position of the first power conversion unit is proximate to the energy storage module, the second local direct current bus can output the second local direct current before the energy storage valve submodule starts, thereby reducing the likelihood of black start for critical loads (for example, BMC).Furthermore, the short high-voltage power extraction cables reduce the likelihood of battery short-circuit faults due to cable insulation failure, further enhancing reliability.

In some embodiments, the energy storage valve submodule further includes a second local direct current bus; where
the second local direct current bus is connected to the plurality of first power conversion units.

By adopting the foregoing solution, the second local direct current bus is provided to enable simultaneous power supply to a plurality of loads.

In some embodiments, the energy storage valve submodule further includes a second output direct current bus; where
the second output direct current bus is connected to the plurality of first power conversion units.

By adopting the foregoing solution, the second output direct current bus connected to the plurality of first power conversion units is provided to enable a plurality of second sub-direct currents output from the plurality of first power conversion units to be transmitted to the second output direct current bus, thereby supplying power to the load connected to the another energy storage valve submodule.

In some embodiments, the energy storage valve submodule further includes a second standby direct current bus; where
the load is connected to another energy storage valve submodule via the second standby direct current bus.

By adopting the foregoing solution, the second standby direct current bus is provided to enable the reception of the second standby direct current output from the another energy storage valve submodule, thereby supplying power to the load.

In some embodiments, the second standby direct current bus is provided in plurality; where
the plurality of second standby direct current buses are connected to a plurality of another energy storage valve submodules and the load.

By adopting the foregoing solution, the plurality of second standby direct current buses are provided to enable the reception of a plurality of second standby direct currents output from the plurality of another energy storage valve submodules, thereby supplying power to the load and further enhancing the reliability of the energy storage valve submodule.

In some embodiments, the energy storage valve submodule further includes a second power module; where
the second power module is connected between the plurality of energy storage modules and a power grid and is configured to perform charge-discharge switching for the plurality of energy storage modules.

By adopting the foregoing solution, the second power module is provided to connect the energy storage valve submodule to the power grid, thereby enabling energy conversion between the energy storage modules and the power grid.

In some embodiments, the energy storage valve submodule further includes a power supply module; where
the power supply module is connected between the load and the plurality of first power conversion units; and/or
the power supply module is connected between the load and another energy storage valve submodule.

By adopting the foregoing solution, the power supply module is provided to convert a direct current supplied to the load, enhancing the compatibility of the energy storage valve submodule.

In some embodiments, the energy storage valve submodule further includes a plurality of overcurrent protection modules; where
the plurality of overcurrent protection modules are connected in one-to-one correspondence between the plurality of first power conversion units and the plurality of energy storage modules, and the energy storage module is configured to generate a first sub-direct current; and the overcurrent protection module is configured to perform overcurrent protection on the first sub-direct current; and
the first power conversion unit is specifically configured to convert the overcurrent-protected first sub-direct current to output a second sub-direct current.

By adopting the foregoing solution, the first sub-direct current is subjected to current-limiting protection before being relayed, enhancing the reliability and safety of the energy storage valve submodule.

In some embodiments, the energy storage valve submodule further includes a plurality of first preprocessing units; where
the plurality of first preprocessing units are connected in one-to-one correspondence between the plurality of first power conversion units and the plurality of energy storage modules, and the energy storage module is configured to generate a first sub-direct current; and the first preprocessing unit is configured to perform interference suppression on the first sub-direct current; and
the first power conversion unit is specifically configured to convert the interference-suppressed first sub-direct current to output a second sub-direct current.

By adopting the foregoing solution, spike voltages in the first sub-direct current output from the energy storage module are removed, enhancing the reliability and stability of the energy storage valve submodule.

In some embodiments, the energy storage valve submodule further includes:
a second power conversion unit connected between the plurality of first power conversion units and the second output direct current bus, and configured to convert a second standby direct current to output the converted second standby direct current to another energy storage valve submodule.

By adopting the foregoing solution, voltage conversion of the local second standby direct current is achieved, enhancing the compatibility of the energy storage valve submodule.

In some embodiments, the energy storage valve submodule further includes:
a second preprocessing unit connected between the plurality of first power conversion units and the second power conversion unit, and configured to perform interference suppression on the second standby direct current; where
the second power conversion unit is specifically configured to convert the interference-suppressed second standby direct current to output the converted second standby direct current to another energy storage valve submodule.

By adopting the foregoing solution, spike voltages in the local second standby direct current are removed, enhancing the reliability and stability of the energy storage valve submodule.

In some embodiments, the energy storage valve submodule further includes:
a third power conversion unit connected between another energy storage valve submodules and the second standby direct current bus, and configured to connect the second standby direct current output from the another energy storage valve submodule and convert the second standby direct current output from the another energy storage valve submodule to output the converted second standby direct current from the another energy storage valve submodule to the second standby direct current bus.

By adopting the foregoing solution, voltage conversion of the second standby direct current output from the another energy storage valve submodule is achieved, enhancing the compatibility of the energy storage valve submodule.

In some embodiments, the energy storage valve submodule further includes:
a third preprocessing unit connected between another energy storage valve submodule and the third power conversion unit, and configured to connect the second standby direct current output from the another energy storage valve submodule and perform interference suppression on the second standby direct current output from the another energy storage valve submodule; where
the third power conversion unit is specifically configured to convert the interference-suppressed second standby direct current output from the another energy storage valve submodule to output the converted second standby direct current from the another energy storage valve submodule to the second standby direct current bus.

By adopting the foregoing solution, spike voltages in the second standby direct current output from the another energy storage valve submodule are removed, enhancing the reliability and stability of the energy storage valve submodule.

According to some embodiments of this application, the load includes a control circuit and/or a switch.

By adopting the foregoing solution, the wiring is simplified, reliability is enhanced, a plurality of power extraction sources for the control circuit and/or switch are achieved, the reliability of the control circuit and/or switch of the submodule is enhanced, and the likelihood of over-discharge of the energy storage module is reduced.

According to a second aspect, an embodiment of this application further provides an energy storage valve, where the energy storage valve includes the energy storage valve submodule described above.

According to a third aspect, an embodiment of this application further provides an energy storage station, where the energy storage station includes the energy storage valve submodule described above.

The foregoing description is merely an overview of the technical solutions of this application. To provide a clearer understanding of the technical means of this application, the solutions can be implemented in accordance with the contents of the specification, and to make the foregoing and other objectives, features, and advantages of this application more apparent and understandable, specific embodiments of this application are set forth below.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments and are not intended to limit this application. In addition, in all the accompanying drawings, same components are denoted by same reference signs. In the accompanying drawings:
FIG. 1 is a schematic structural diagram of an energy storage valve submodule according to an embodiment of this application;
FIG. 2 is another schematic structural diagram of an energy storage valve submodule according to an embodiment of this application;
FIG. 3 is another schematic structural diagram of an energy storage valve submodule according to an embodiment of this application;
FIG. 4a is another schematic structural diagram of an energy storage valve submodule according to an embodiment of this application;
FIG. 4b is another schematic structural diagram of an energy storage valve submodule according to an embodiment of this application;
FIG. 5 is another schematic structural diagram of an energy storage valve submodule according to an embodiment of this application;
FIG. 6 is another schematic structural diagram of an energy storage valve submodule according to an embodiment of this application;
FIG. 7 is another schematic structural diagram of an energy storage valve submodule according to an embodiment of this application;
FIG. 8 is another schematic structural diagram of an energy storage valve submodule according to an embodiment of this application;
FIG. 9 is another schematic structural diagram of an energy storage valve submodule according to an embodiment of this application;
FIG. 10 is another schematic structural diagram of an energy storage valve submodule according to an embodiment of this application;
FIG. 11 is another schematic structural diagram of an energy storage valve submodule according to an embodiment of this application;

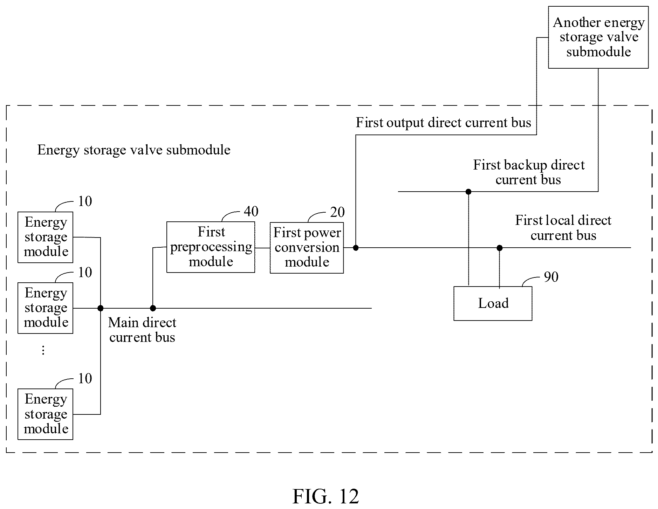

FIG. 12 is another schematic structural diagram of an energy storage valve submodule according to an embodiment of this application;
FIG. 13 is another schematic structural diagram of an energy storage valve submodule according to an embodiment of this application;
FIG. 14 is another schematic structural diagram of an energy storage valve submodule according to an embodiment of this application;
FIG. 15 is another schematic structural diagram of an energy storage valve submodule according to an embodiment of this application;
FIG. 16 is another schematic structural diagram of an energy storage valve submodule according to an embodiment of this application;
FIG. 17 is another schematic structural diagram of an energy storage valve submodule according to an embodiment of this application;
FIG. 18 is another schematic structural diagram of an energy storage valve submodule according to an embodiment of this application;
FIG. 19 is another schematic structural diagram of an energy storage valve submodule according to an embodiment of this application;
FIG. 20 is another schematic structural diagram of an energy storage valve submodule according to an embodiment of this application;
FIG. 21 is another schematic structural diagram of an energy storage valve submodule according to an embodiment of this application;
FIG. 22 is another schematic structural diagram of an energy storage valve submodule according to an embodiment of this application;
FIG. 23 is another schematic structural diagram of an energy storage valve submodule according to an embodiment of this application;
FIG. 24 is another schematic structural diagram of an energy storage valve submodule according to an embodiment of this application;
FIG. 25 is another schematic structural diagram of an energy storage valve submodule according to an embodiment of this application;
FIG. 26 is another schematic structural diagram of an energy storage valve submodule according to an embodiment of this application;
FIG. 27 is another schematic structural diagram of an energy storage valve submodule according to an embodiment of this application;
FIG. 28 is another schematic structural diagram of an energy storage valve submodule according to an embodiment of this application;
FIG. 29 is another schematic structural diagram of an energy storage valve submodule according to an embodiment of this application;
FIG. 30 is another schematic structural diagram of an energy storage valve submodule according to an embodiment of this application; and
FIG. 31 is another schematic structural diagram of an energy storage valve submodule according to an embodiment of this application.

### DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include/comprise" and "have" and any other variations thereof in the specification, claims, and brief description of drawings of this application are intended to cover non-exclusive inclusions.

In the description of the embodiments of this application, the technical terms "first", "second" and the like are merely intended to distinguish between different objects, and shall not be understood as any indication or implication of relative importance or any implicit indication of the number, specific sequence, or primary-secondary relationship of the technical features indicated. In the description of the embodiments of this application, "a plurality of" means at least two unless otherwise specifically stated.

In this specification, reference to "embodiment" means that specific features, structures or characteristics described with reference to the embodiment may be incorporated in at least one embodiment of this application. The word "embodiment" appearing in various places in this specification does not necessarily refer to the same embodiment or an independent or alternative embodiment that is exclusive of other embodiments. Persons skilled in the art explicitly and implicitly understand that the embodiments described herein may be combined with other embodiments.

In the descriptions of the embodiments of this application, the term "and/or" is only an associative relationship for describing associated objects, indicating that three relationships may be present. For example, A and/or B may indicate the following three cases: presence of only A, presence of both A and B, and presence of only B. In addition, a character "/" in this specification generally indicates an "or" relationship between contextually associated objects.

In the descriptions of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitation on the embodiments of this application.

In the description of the embodiments of this application, unless otherwise specified and defined explicitly, the technical terms "mounting", "connection", "joining", and "fastening" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in this application as appropriate to specific situations.

Currently, from the perspective of market development, application of energy storage stations is being more extensive. Energy storage stations are widely used in the field of transmission and distribution grids. With the continuous expansion of application fields of energy storage stations, market demands for traction batteries are also increasing.

With the widespread application of energy storage stations in power transmission and distribution grids, related energy storage valve submodules typically extract power internally from local energy storage valve submodules. Devices such as a battery management controller (Battery management controller, BMC) and sub-battery management unit (Sub battery management unit, SBMU) inevitably consume significant power even when power modules are in a dormant state. Once an energy storage valve submodule is bypassed, the energy storage module cannot charge or discharge normally, leading to over-discharge of the energy storage module, which deteriorates the charge-discharge performance of the battery cells, causes thermal runaway in the battery module, and results in safety incidents. In recent years, energy storage valve submodules with redundant power supply have emerged, where each layer of flexible direct current submodules in a valve tower is treated as one unit, the high-voltage power supply of each submodule in the unit not only supplies power to its own module but also serves as a redundant power supply for other submodules. Each submodule prioritizes its own high-voltage power supply, and in this manner, redundant power supplies of all submodules in the unit form a ring structure, ensuring that each submodule has dual power supply paths, allowing it to be powered by an adjacent high-voltage power supply when its own high-voltage power supply is lost, thereby improving the power supply reliability of the submodule. However, when this energy storage valve submodule is cut off by a bypass switch due to a fault, a method of cutting off the redundant power supply is adopted to prevent the module from remaining energized. Consequently, once the energy storage valve submodule is bypassed, the issue of over-discharge of the energy storage module persists.

To address the problems of poor reliability, singular power extraction sources, and the inability to reduce the likelihood of over-discharge of the energy storage module, the applicant has found through research that, in design, connecting an energy storage module and a load via a main direct current bus and further connecting the load to another energy storage valve submodule can simplify the wiring, enhance reliability, achieve a plurality of power extraction sources, and reduce the likelihood of over-discharge of the energy storage module.

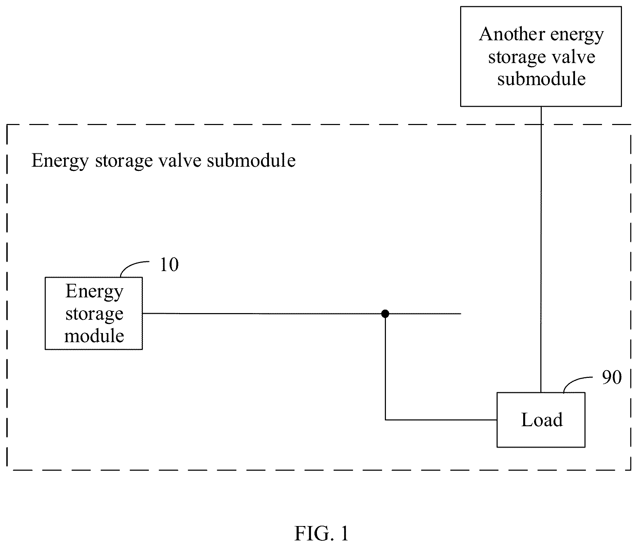

According to some embodiments of this application, referring to FIG. 1, FIG. 1 is a schematic structural diagram of an energy storage valve submodule according to an embodiment of this application. For ease of explanation, only the parts relevant to this embodiment are shown, with details as follows:

The energy storage valve submodule includes an energy storage module 10 and a load 90; where the load 90 is electrically connected to the energy storage module 10; and
the load 90 is further electrically connected to another energy storage valve submodule.

It can be understood that the energy storage module may include at least one of a battery pack, a supercapacitor, a flywheel energy storage, or a compressed gas energy storage. Taking a battery pack as an example, the battery pack provides an energy source to achieve voltage balancing of the power grid. The battery pack internally includes battery cells and devices such as copper busbars or wiring harnesses for high-voltage connections. Optionally, the battery pack does not include any high-voltage relays inside. The load 90 includes at least one of a control circuit or a switch. The another energy storage valve submodule may be an adjacent energy storage valve submodule or may be any another energy storage valve submodule.

The energy storage module 10 supplies power to the load 90; and the another energy storage valve submodule is also connected to the load 90 to supply power to the load 90. In this way, the load 90 has a plurality of power extraction sources. Under the condition that the energy storage valve submodule is bypassed due to a fault, the another energy storage valve submodule can supply power to the load 90, reducing the likelihood of over-discharge of the energy storage module.

Since the load is electrically connected to the energy storage module, and the load is further connected to another energy storage valve submodule, the wiring is simplified, reliability is enhanced, a plurality of power extraction sources are achieved, and the likelihood of over-discharge of the energy storage module is reduced.

According to some embodiments of this application, the load 90 includes a control circuit and/or a switch.

It should be noted that the control circuit includes at least one of a system management controller, a battery management controller, a sub-battery management unit, a fire protection controller, a power module control circuit, or a busbar module control circuit. The switch includes at least one of a busbar switch or an isolation switch. The control circuit may be disposed on various control boards.

By adopting the foregoing solution, the wiring is simplified, reliability is enhanced, a plurality of power extraction sources for the control circuit and/or switch are achieved, and a control circuit and/or switch of each submodule is provided with dual power supply paths, enabling the submodule to be supplied power from an adjacent high-voltage power source when its own high-voltage power supply is lost, thereby improving the reliability of the control circuit and/or switch of the submodule and reducing the likelihood of over-discharge of the energy storage module.

According to some embodiments of this application, the energy storage module 10 is provided in one or plurality, where the plurality of energy storage modules 10 are connected in series and/or in parallel.

It should be noted that the load 90 may be connected to one or more energy storage modules 10. The energy storage module 10 is configured to output a first sub-direct current; and one or more first sub-direct currents are combined to generate a first direct current to supply power to the load 90.

By adopting the foregoing solution, the energy storage module 10 is flexibly configured, broadening the application scope of the energy storage valve submodule.

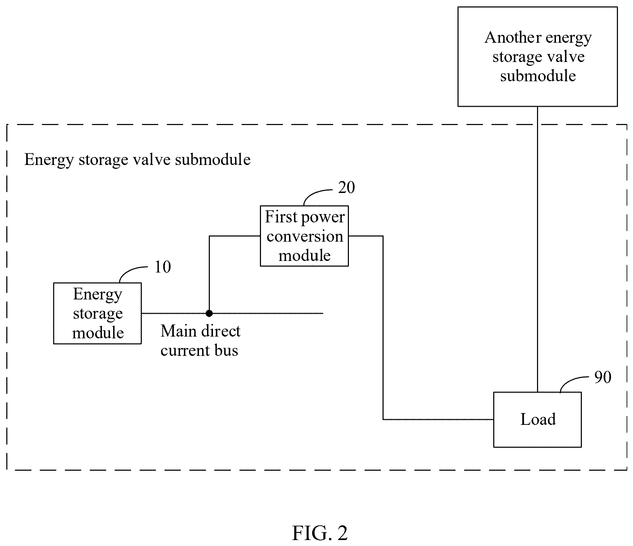

According to some embodiments of this application, optionally, referring to FIG. 2, FIG. 2 is a schematic structural diagram of an energy storage valve submodule according to another embodiment of this application. For ease of explanation, only the parts relevant to this embodiment are shown, with details as follows:
In addition to all the components and assemblies of the energy storage valve submodule shown in FIG. 1, the energy storage valve submodule further includes a first power conversion module 20.

The first power conversion module 20 is connected to the energy storage module 10 via a main direct current bus, and the load 90 is connected to the first power conversion module 20.

It should be noted that the main direct current bus may be connected to one or more energy storage modules 10; the energy storage module 10 is configured to output a first sub-direct current; and one or more first sub-direct currents are transmitted to the main direct current bus to output a first direct current. Thus, a plurality of energy storage modules share the main direct current bus, reducing wiring components, shortening power extraction cables, and enhancing the reliability and safety of the energy storage valve submodule.

The main direct current bus may include a positive main direct current bus and a negative main direct current bus.

It should be noted that the first power conversion module 20 is configured to perform voltage conversion on the first direct current to output a second direct current. The second direct current is used to supply power to the load 90.

The first power conversion module 20 can achieve DC-DC unidirectional/bidirectional energy conversion to adapt to the required voltage level of the first local direct current bus. To meet insulation requirements, the first power conversion module 20 may include an internal isolation transformer.

By adopting the foregoing solution, voltage conversion of the first direct current output from the main direct current bus is achieved, enhancing the compatibility of the energy storage valve submodule.

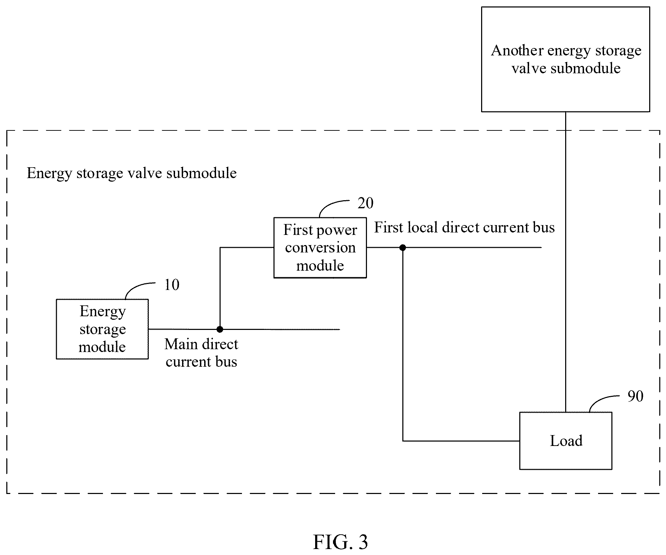

According to some embodiments of this application, optionally, referring to FIG. 3, FIG. 3 is a schematic structural diagram of an energy storage valve submodule according to another embodiment of this application. For ease of explanation, only the parts relevant to this embodiment are shown, with details as follows:
In addition to all the components and assemblies of the energy storage valve submodule shown in FIG. 2, the energy storage valve submodule further includes a first local direct current bus.

The first local direct current bus is connected to the first power conversion module 20.

It should be noted that the second direct current is transmitted to the first local direct current bus to output a first local direct current. The load 90 may be powered by the first local direct current.

By providing the first local direct current bus, simultaneous power supply to a plurality of loads is achieved.

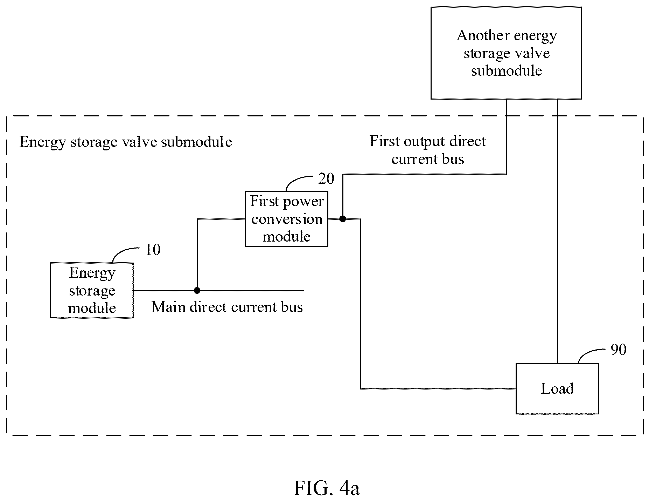

According to some embodiments of this application, optionally, referring to FIG. 4a, FIG. 4a is a schematic structural diagram of an energy storage valve submodule according to another embodiment of this application. For ease of explanation, only the parts relevant to this embodiment are shown, with details as follows:
In addition to all the components and assemblies of the energy storage valve submodule shown in FIG. 2, the energy storage valve submodule further includes a first output direct current bus.

The first output direct current bus is connected to the first power conversion module 20.

It should be noted that the second direct current is also transmitted to the first output direct current bus to output a first standby direct current to another energy storage valve submodule.

By providing the first output direct current bus connected to the first power conversion module, the second direct current output from the first power conversion module is transmitted to the first output direct current bus to supply power to the load connected to the another energy storage valve submodule.

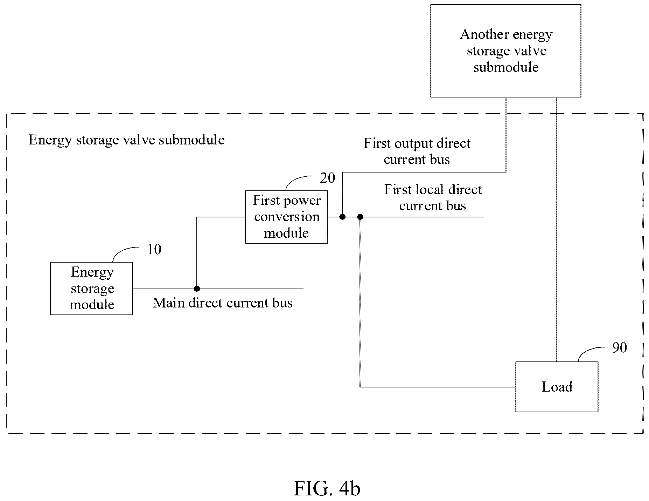

According to some embodiments of this application, optionally, referring to FIG. 4b, FIG. 4b is a schematic structural diagram of an energy storage valve submodule according to another embodiment of this application. For ease of explanation, only the parts relevant to this embodiment are shown, with details as follows:
In addition to all the components and assemblies of the energy storage valve submodule shown in FIG. 3, the energy storage valve submodule further includes a first output direct current bus.

The first output direct current bus is connected to the first power conversion module 20.

It should be noted that the second direct current is also transmitted to the first output direct current bus to output a first standby direct current to another energy storage valve submodule. Moreover, by providing the first local direct current bus, simultaneous power supply to a plurality of loads is achieved.

By providing the first output direct current bus connected to the first power conversion module, the second direct current output from the first power conversion module is transmitted to the first output direct current bus to supply power to the load connected to the another energy storage valve submodule.

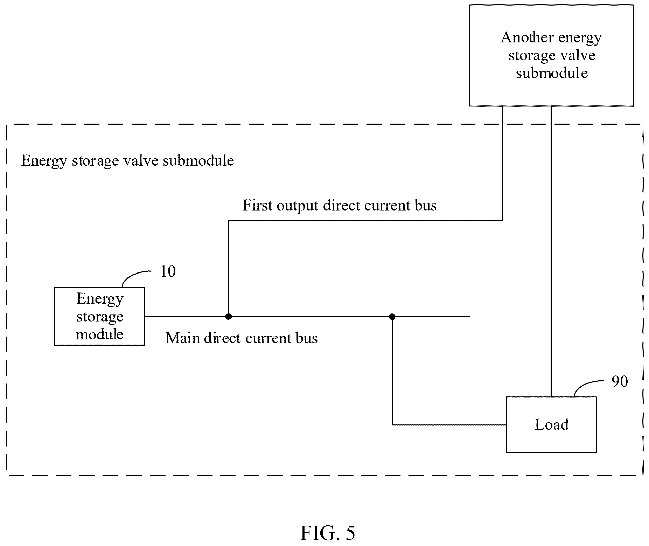

According to some embodiments of this application, optionally, referring to FIG. 5, FIG. 5 is a schematic structural diagram of an energy storage valve submodule according to another embodiment of this application. For ease of explanation, only the parts relevant to this embodiment are shown, with details as follows:
In addition to all the components and assemblies of the energy storage valve submodule shown in FIG. 1, the energy storage valve submodule further includes a first output direct current bus.

The first output direct current bus is connected to a main direct current bus and another energy storage valve submodule.

It should be noted that the first direct current is also transmitted to the first output direct current bus to output a first standby direct current to the another energy storage valve submodule.

By providing the first output direct current bus connected to the main direct current bus, the first direct current output from the main direct current bus is transmitted to the first output direct current bus to supply power to the load connected to the another energy storage valve submodule.

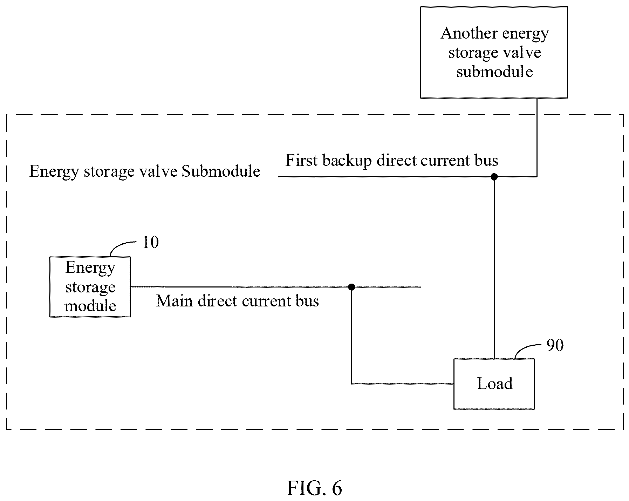

According to some embodiments of this application, optionally, referring to FIG. 6, FIG. 6 is a schematic structural diagram of an energy storage valve submodule according to another embodiment of this application. For ease of explanation, only the parts relevant to this embodiment are shown, with details as follows:
In addition to all the components and assemblies of the energy storage valve submodule shown in FIG. 1, the energy storage valve submodule further includes a first standby direct current bus; and
the load 90 is connected to another energy storage valve submodule via the first standby direct current bus.

It should be noted that the first standby direct current bus is used to receive the first standby direct current output from the another energy storage valve submodule. The load 90 may be powered by the first standby direct current. The first standby direct current bus may be connected to a plurality of loads 90.

By providing the first standby direct current bus, the first standby direct current output from the another energy storage valve submodule is connected to supply power to the load 90.

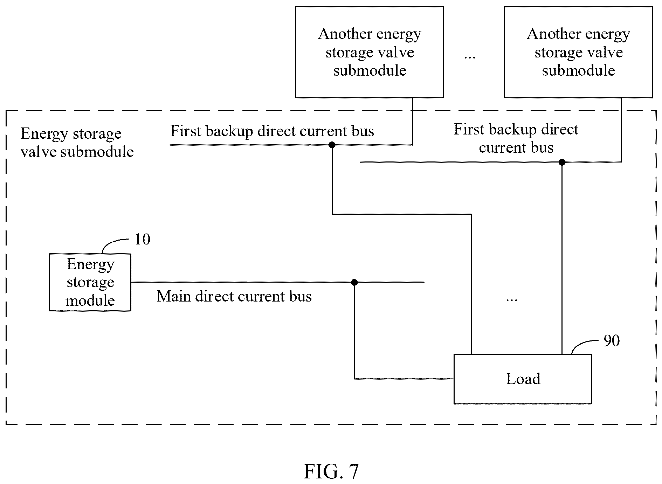

According to some embodiments of this application, optionally, referring to FIG. 7, FIG. 7 is a schematic structural diagram of an energy storage valve submodule according to another embodiment of this application. For ease of explanation, only the parts relevant to this embodiment are shown, with details as follows:
In addition to all the components and assemblies of the energy storage valve submodule shown in FIG. 6, the first standby direct current bus is provided in plurality; where
the plurality of first standby direct current buses are connected to a plurality of another energy storage valve submodules and the load.

It should be noted that the plurality of first standby direct current buses are used to receive a plurality of first standby direct currents output from the plurality of another energy storage valve submodules; and the load 90 may be powered by the plurality of first standby direct currents. The plurality of first standby direct current buses may be connected to a plurality of loads 90.

By providing the plurality of first standby direct current buses, the plurality of first standby direct currents output from the plurality of another energy storage valve submodules are received to supply power to the loads 90, further enhancing the reliability of the energy storage valve submodule.

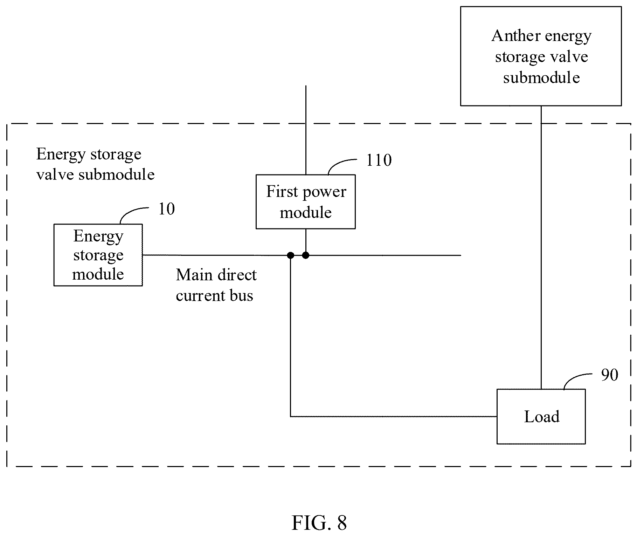

According to some embodiments of this application, optionally, referring to FIG. 8, FIG. 8 is a schematic structural diagram of an energy storage valve submodule according to another embodiment of this application. For ease of explanation, only the parts relevant to this embodiment are shown, with details as follows:
In addition to all the components and assemblies of the energy storage valve submodule shown in FIG. 1, the energy storage valve submodule further includes a first power module 110.

The first power module 110 is connected between the energy storage module 10 and a power grid and is configured to perform charge-discharge switching for the energy storage module 10.

The first power module 110 performs direct current relaying or conversion to enable the power grid to charge the energy storage module 10 or the energy storage module 10 to discharge to the power grid.

By providing the first power module 110, the energy storage valve submodule is connected to the power grid, thereby enabling energy conversion between the energy storage module 10 and the power grid.

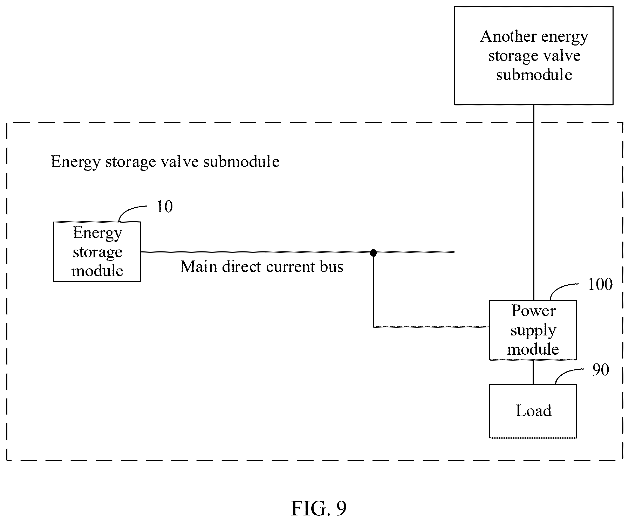

According to some embodiments of this application, optionally, referring to FIG. 9, FIG. 9 is a schematic structural diagram of an energy storage valve submodule according to another embodiment of this application. For ease of explanation, only the parts relevant to this embodiment are shown, with details as follows:
In addition to all the components and assemblies of the energy storage valve submodule shown in FIG. 1, the energy storage valve submodule further includes a power supply module 100.

The power supply module 100 is connected between the load 90 and the energy storage module 10; and/or
the power supply module 100 is connected between the load and another energy storage valve submodule.

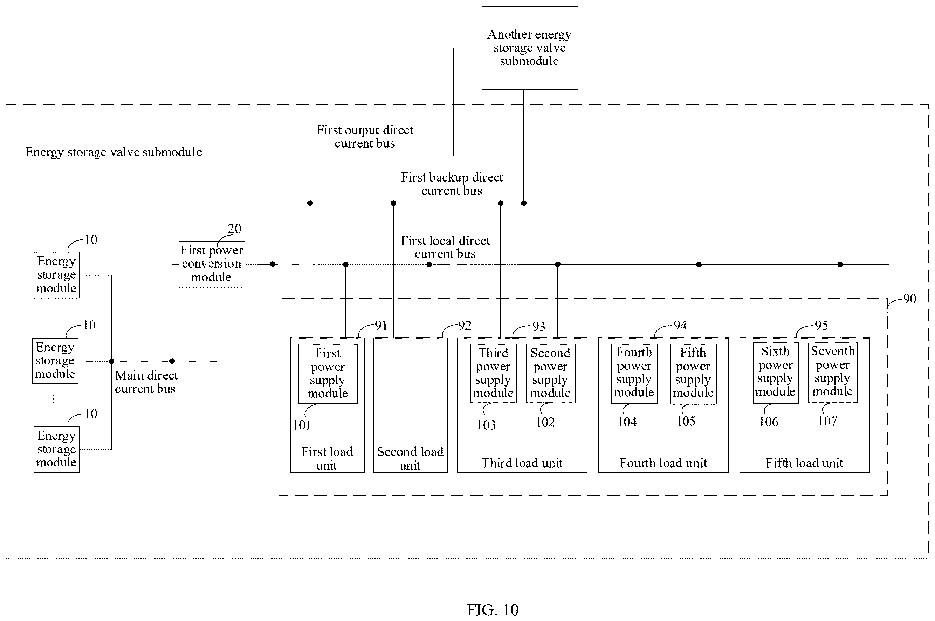

As an example and not a limitation, as shown in FIG. 10, the load 90 includes at least one of a first load unit 91, a second load unit 92, a third load unit 93, a fourth load unit 94, and a fifth load unit 95.

The first load unit 91 is connected to a first power supply module 101, and the first power supply module 101 is configured to convert a first local direct current or a first standby direct current output from the another energy storage valve submodule to output a first supply voltage; the first load unit 91 is powered based on a first supply voltage. It should be noted that, during normal operation, the first load unit 91 is powered by the first local direct current bus; under the condition that the local energy storage valve submodule is bypassed and/or the voltage of a local energy storage module is below a threshold, the another energy storage valve submodule supplies power to the first load unit 91 via the first standby direct current bus.

The second load unit 92 is configured to be powered based on a first local direct current or a first standby direct current output from the another energy storage valve submodule. It should be noted that, under the condition that the supply voltage of the second load unit 92 matches the voltages of the first local direct current bus and the first standby direct current bus, no voltage conversion is required, and power can be directly extracted from the first local direct current bus and the first standby direct current bus. During normal operation of the local energy storage valve submodule, the second load unit is powered by a first local direct current bus. Under the condition that the local energy storage valve submodule is bypassed and/or the voltage of a local energy storage module is below a threshold, the another energy storage valve submodule supplies power to the second load unit 92 via the first standby direct current bus.

The third load unit 93 is connected to a second power supply module 102 and a third power supply module 103, the second power supply module 102 is configured to convert a first local direct current to output a second supply voltage; the third power supply module 103 is configured to convert a first standby direct current output from the another energy storage valve submodule to output a third supply voltage; and the third load unit 93 is powered based on a second supply voltage or a third supply voltage. It should be noted that, during normal operation, the third load unit 93 is powered by the first local direct current bus; under the condition that the second power supply module 102 fails, the local energy storage valve submodule is bypassed, and/or the voltage of a local energy storage module is below a threshold, the another energy storage valve submodule supplies power to the third load unit 93 via the first standby direct current bus.

The fourth load unit 94 is connected to a fourth power supply module 104 and a fifth power supply module 105. The fourth power supply module 104 is configured to convert a first direct current output from the first power module corresponding to a local energy storage valve submodule to output a fourth supply voltage; the fifth power supply module 105 is configured to convert a first local direct current to output a fifth supply voltage; and the fourth load unit 94 is powered based on a fourth supply voltage or a fifth supply voltage. It should be noted that the fourth load unit 94 is generally an internal load of the first power module. During normal operation of the local energy storage valve submodule, the fourth load unit 94 is powered by the fourth power supply module 104, and after the fourth power supply module 104 fails, the fifth power supply module 105 can supply power to the fourth load unit 94.

The fifth load unit 95 is connected to a sixth power supply module 106 and a seventh power supply module 107. The sixth power supply module 106 is configured to convert a second direct current output from the energy storage module corresponding to a local energy storage valve submodule to output a sixth supply voltage; the seventh power supply module 107 is configured to convert a first local direct current to output a seventh supply voltage; and the fifth load unit 95 is powered based on a sixth supply voltage or a seventh supply voltage. It should be noted that the fifth load unit 95 is generally applicable to internal equipment of the energy storage module. During normal operation of the local energy storage valve submodule, the fifth load unit 95 is powered by the sixth power supply module 106. Under the condition that the sixth power supply module 106 fails, the local energy storage valve submodule is bypassed, and/or the voltage of the energy storage module is below a threshold, the first standby direct current bus supplies power to the fifth load unit 95 via the seventh power supply module 107.

By adopting the foregoing solution, the power supply module 100 is provided to convert a direct current supplied to the load, enhancing the compatibility of the energy storage valve submodule.

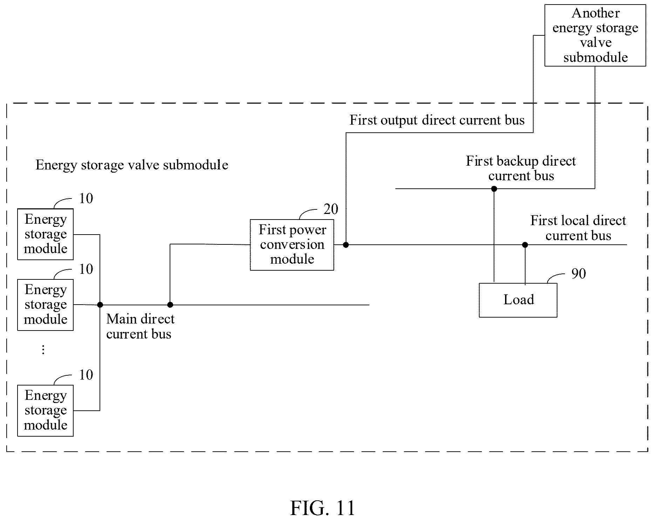

According to some embodiments of this application, optionally, referring to FIG. 11, FIG. 11 is a schematic structural diagram of an energy storage valve submodule according to another embodiment of this application. For ease of explanation, only the parts relevant to this embodiment are shown, with details as follows:
In addition to all the components and assemblies of the energy storage valve submodule shown in FIG. 1, the energy storage valve submodule further includes a first power conversion module 20, a first local direct current bus, a first output direct current bus, and a first standby direct current bus; where the energy storage module 10 is provided in plurality. The energy storage module is configured to output a first sub-direct current.

The plurality of first sub-direct currents are transmitted to the main direct current bus to output a first direct current.

The first power conversion module 20 is connected to the main direct current bus, and the first power conversion module 20 is configured to perform voltage conversion on the first direct current to output a second direct current.

The second direct current is transmitted to the first local direct current bus to output a first local direct current.

The second direct current is also transmitted to the first output direct current bus to output a first standby direct current to another energy storage valve submodule.

The first standby direct current bus is used to receive the first standby direct current output from another energy storage valve submodule.

The operating mode of the energy storage valve submodule shown in FIG. 10 is specifically as follows:
Each energy storage module 10 outputs respective first sub-direct current; each first sub-direct current is transmitted to the main direct current bus to output a first direct current; the first power conversion module 20 performs voltage conversion on the first direct current to output a second direct current; the second direct current is transmitted to the first local direct current bus to output a first local direct current; the second direct current is also transmitted to the first output direct current bus to output a first standby direct current to another energy storage valve submodule; and the first standby direct current bus receives the first standby direct current output from other energy storage valve submodules.

Since the energy storage valve submodule includes the first standby direct current bus and the first local direct current bus, under the condition that power extraction from the first local direct current bus fails, power can be extracted via the redundant first standby direct current, achieving a plurality of power extraction methods, reducing the failure rate of the energy storage valve submodule, and enhancing reliability. Moreover, under the condition that the energy storage valve submodule is bypassed due to a fault, power can be extracted solely via the first standby direct current bus, and the energy storage valve submodule is supplied by the energy storage module corresponding to the another energy storage valve submodule, thereby reducing the likelihood of battery performance degradation, thermal runaway of the energy storage module, and temporary shutdown for maintenance of the energy storage valve due to over-discharge of the local energy storage module.

According to some embodiments of this application, the energy storage modules 10 are disposed in respective electrical cabinets.

Each electrical cabinet includes a plurality of electrical boxes, and the energy storage modules 10 are disposed in the plurality of electrical boxes.

By adopting the foregoing solution, the energy storage modules are disposed in respective electrical cabinets, protecting the energy storage modules, extending their lifespans, and enhancing the reliability of the energy storage valve submodule.

According to some embodiments of this application, the first power conversion module 20 is disposed in a busbar cabinet.

The busbar cabinet further includes a busbar switch, where a first end of the busbar switch is connected to the main direct current bus, and a second end of the busbar switch is connected to the first power module. The first power conversion module can extract power before the busbar switch in the busbar cabinet and output to the first local direct current bus after conversion.

The power extraction position of the first power conversion module 20 is at the main direct current bus, reducing the number of power extraction points within the energy storage valve submodule. The plurality of energy storage modules share the main direct current bus, reducing wiring components, shortening power extraction cables, and confining power extraction cables to the busbar cabinet, thereby reducing short-circuit incidents due to cable insulation failure and enhancing the reliability and safety of the energy storage valve submodule.

According to some embodiments of this application, optionally, referring to FIG. 11, FIG. 11 is a schematic structural diagram of an energy storage valve submodule according to another embodiment of this application. For ease of explanation, only the parts relevant to this embodiment are shown, with details as follows:

In addition to all the components and assemblies of the energy storage valve submodule shown in FIG. 10, the energy storage valve submodule further includes a first preprocessing module 40; where
the first preprocessing module 40 is connected between the first power conversion module 20 and the main direct current bus, and the first preprocessing module 40 is configured to perform interference suppression on the first direct current; and
the first power conversion module 20 is specifically configured to perform voltage conversion on the interference-suppressed first direct current to output a stable second direct current.

As an example and not a limitation, interference suppression includes at least one of voltage stabilization and filtering; and the first preprocessing module 40 includes at least one of a first voltage stabilization module and a first filtering module. The first voltage stabilization module is configured to stabilize the first direct current; and the first filtering module is configured to filter the first direct current.

By providing the first preprocessing module 40, spike voltages in the first direct current output from the main direct current bus are removed, enhancing the reliability and stability of the energy storage valve submodule.

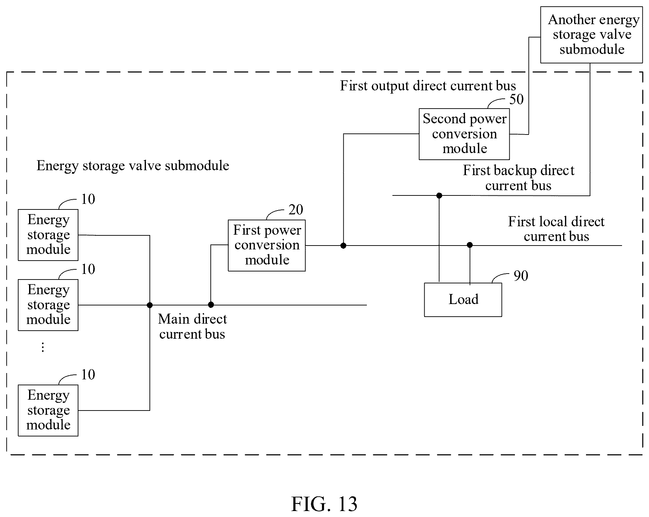

According to some embodiments of this application, optionally, referring to FIG. 13, FIG. 13 is a schematic structural diagram of an energy storage valve submodule according to another embodiment of this application. For ease of explanation, only the parts relevant to this embodiment are shown, with details as follows:

In addition to all the components and assemblies of the energy storage valve submodule shown in FIG. 11, the energy storage valve submodule further includes a second power conversion module 50; where
the second power conversion module 50 is connected between the first power conversion module 20 and the first output direct current bus, and configured to perform voltage conversion on the first standby direct current to output the converted first standby direct current to another energy storage valve submodule.

The second power conversion module 50 is connected to the first power conversion module 20 to connect the local first standby direct current, performs voltage conversion on the local first standby direct current, and outputs the converted local first standby direct current to the another energy storage valve submodule via the first output direct current bus, thereby constructing the first standby direct current bus for the another energy storage valve submodule.

The second power conversion module 50 can achieve DC-DC unidirectional/bidirectional energy conversion to adapt to the required voltage level of the first output direct current bus. To meet insulation requirements, the second power conversion module 50 may include an internal isolation transformer.

By providing the second power conversion module 50, voltage conversion of the local first standby direct current is achieved, enhancing the compatibility of the energy storage valve submodule.

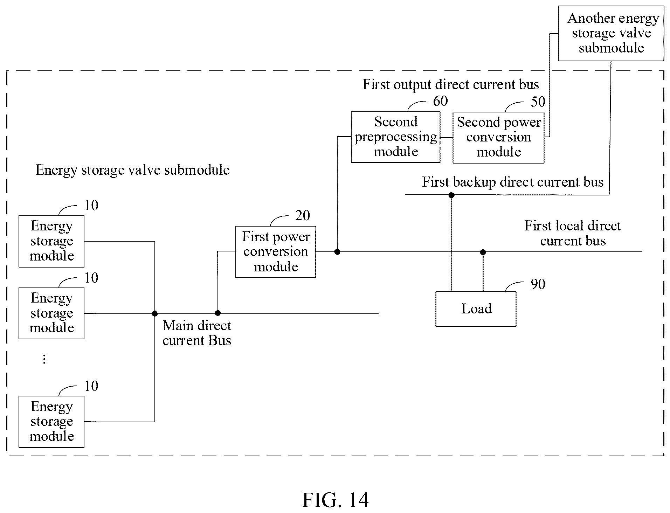

According to some embodiments of this application, optionally, referring to FIG. 14, FIG. 14 is a schematic structural diagram of an energy storage valve submodule according to another embodiment of this application. For ease of explanation, only the parts relevant to this embodiment are shown, with details as follows:
In addition to all the components and assemblies of the energy storage valve submodule shown in FIG. 13, the energy storage valve submodule further includes a second preprocessing module 60.

The second preprocessing module 60 is connected between the first power conversion module 20 and the second power conversion module 50, and configured to perform interference suppression on the first standby direct current.

The second power conversion module 50 is specifically configured to perform voltage conversion on the interference-suppressed first standby direct current to output the converted first standby direct current to another energy storage valve submodule.

As an example and not a limitation, interference suppression includes at least one of voltage stabilization and filtering; and the second preprocessing module 60 includes at least one of a second voltage stabilization module and a second filtering module. The second voltage stabilization module is configured to stabilize the first standby direct current; and the second filtering module is configured to filter the first standby direct current.

By providing the second preprocessing module 60, spike voltages in the local first standby direct current are removed, enhancing the reliability and stability of the energy storage valve submodule.

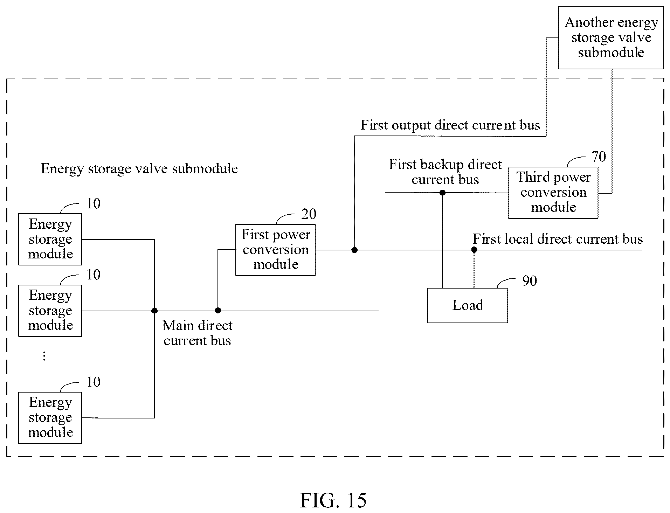

According to some embodiments of this application, optionally, referring to FIG. 15, FIG. 15 is a schematic structural diagram of an energy storage valve submodule according to another embodiment of this application. For ease of explanation, only the parts relevant to this embodiment are shown, with details as follows:
In addition to all the components and assemblies of the energy storage valve submodule shown in FIG. 11, the energy storage valve submodule further includes a third power conversion module 70.

The third power conversion module 70 is connected between another energy storage valve submodule and the first standby direct current bus, and configured to receive the first standby direct current output from the another energy storage valve submodule and perform voltage conversion on the first standby direct current output from the another energy storage valve submodule to output the converted first standby direct current from the another energy storage valve submodule to the first standby direct current bus.

The third power conversion module 70 can achieve DC-DC unidirectional/bidirectional energy conversion to adapt to the required voltage level of the first output direct current bus. To meet insulation requirements, the third power conversion module 70 may include an internal isolation transformer.

By providing the third power conversion module 70, voltage conversion of the first standby direct current output from the another energy storage valve submodule is achieved, enhancing the compatibility of the energy storage valve submodule.

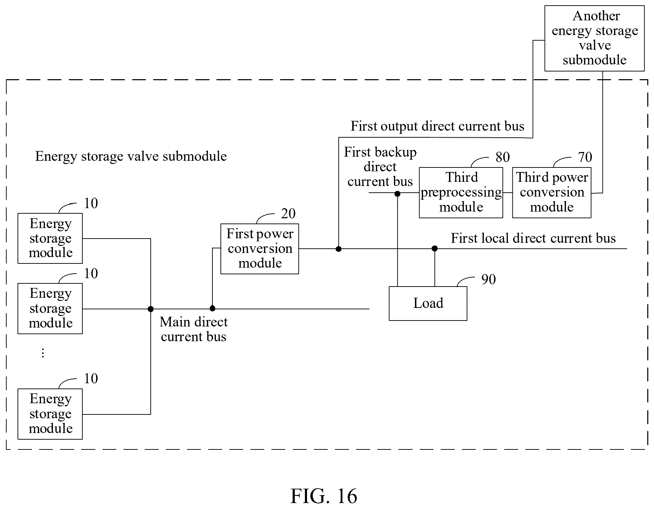

According to some embodiments of this application, optionally, referring to FIG. 16, FIG. 16 is a schematic structural diagram of an energy storage valve submodule according to another embodiment of this application. For ease of explanation, only the parts relevant to this embodiment are shown, with details as follows:
In addition to all the components and assemblies of the energy storage valve submodule shown in FIG. 15, the energy storage valve submodule further includes a third preprocessing module 80.

The third preprocessing module 80 is connected between another energy storage valve submodule and the third power conversion module 70, and configured to receive the first standby direct current output from the another energy storage valve submodule and perform interference suppression on the first standby direct current output from the another energy storage valve submodule; and
the third power conversion module 70 is specifically configured to perform voltage conversion on the interference-suppressed first standby direct current output from the another energy storage valve submodule to output the converted first standby direct current from the another energy storage valve submodule to the first standby direct current bus.

As an example and not a limitation, interference suppression includes at least one of voltage stabilization and filtering; and the third preprocessing module 80 includes at least one of a third voltage stabilization module and a third filtering module. The third voltage stabilization module is configured to stabilize the first standby direct current output from the another energy storage valve submodule; and the third filtering module is configured to filter the first standby direct current output from the another energy storage valve submodule.

By providing the third preprocessing module 80, spike voltages in the first standby direct current output from the another energy storage valve submodule are removed, enhancing the reliability and stability of the energy storage valve submodule.

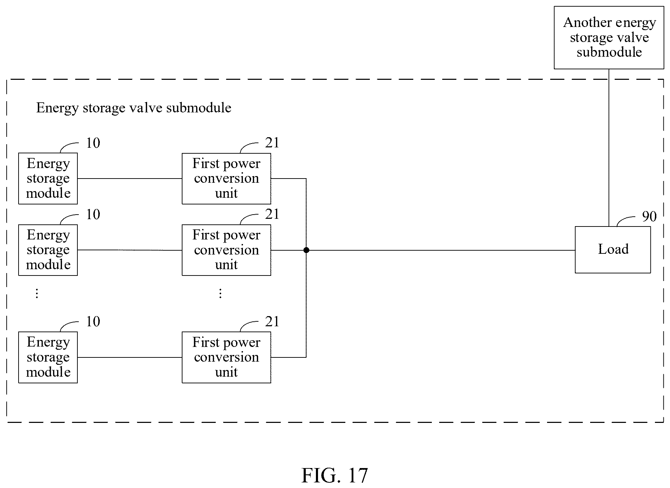

According to some embodiments of this application, optionally, referring to FIG. 17, FIG. 17 is a schematic structural diagram of an energy storage valve submodule according to another embodiment of this application. For ease of explanation, only the parts relevant to this embodiment are shown, with details as follows:
In addition to all the components and assemblies of the energy storage valve submodule shown in FIG. 1, the energy storage valve submodule further includes a plurality of first power conversion units 21, and the energy storage module 10 is provided in plurality.

The plurality of energy storage modules 10 are connected to the plurality of first power conversion units 21; the load 90 is electrically connected to the plurality of first power conversion units 21; and the load 90 is further electrically connected to another energy storage valve submodule.

The energy storage module 10 is configured to output a first sub-direct current; the first power conversion unit 21 is configured to convert the first sub-direct current to output a second sub-direct current; and the plurality of second sub-direct currents are combined to supply power to the load 90.

It can be understood that the energy storage module 10 may include at least one of a battery pack, a supercapacitor, a flywheel energy storage, or a compressed gas energy storage. Taking a battery pack as an example, the battery pack provides an energy source to achieve voltage balancing of the power grid. The battery pack internally includes battery cells and devices such as copper busbars or wiring harnesses for high-voltage connections. Optionally, the battery pack does not include any high-voltage relays. There are a plurality of first power conversion units, which may be equal in number to the energy storage modules or different in number. The first power conversion units may be connected to the energy storage modules in a one-to-one correspondence, or some energy storage modules may be connected to one first power conversion unit while other energy storage modules are connected to other first power conversion units, with no limitation on the connection method. The load 90 includes at least one of a control circuit or a switch.

In specific implementation, each energy storage module 10 includes a plurality of electrical cabinets, each electrical cabinet includes a plurality of electrical boxes and one main control box, each energy storage module 10 is disposed in the plurality of electrical boxes, and each first power conversion unit 21 is disposed in each main control box.

The first power conversion unit 21 can achieve DC-DC unidirectional/bidirectional energy conversion to adapt to the required voltage level of the second local direct current bus. To meet insulation requirements, the first power conversion unit 21 may include an internal isolation transformer.

The plurality of energy storage modules 10 supply power to the load 90 via the first power conversion units 21; and other energy storage valve submodules are also connected to the load 90 to supply power to the load 90, thereby providing the load 90 with a plurality of power extraction sources. When the energy storage valve submodule is bypassed due to a fault, the another energy storage valve submodule can supply power to the load 90, reducing the likelihood of over-discharge of the energy storage module.

Since the load is electrically connected to a plurality of energy storage modules via the plurality of first power conversion units, and the load is further connected to the another energy storage valve submodule, the wiring is simplified, reliability is enhanced, a plurality of power extraction sources are achieved, and the likelihood of over-discharge of the energy storage module is reduced. Moreover, since the power extraction position of the first power conversion unit 21 is proximate to the energy storage module 10, the second local direct current bus can output the second local direct current before the energy storage valve submodule starts, thereby reducing the likelihood of black start for critical loads (for example, BMC), further enhancing reliability. Finally, since the power extraction position of the first power conversion unit 21 is proximate to the energy storage module 10, the high-voltage power extraction cables are short, reducing the likelihood of battery short-circuit faults due to cable insulation failure, further enhancing reliability.

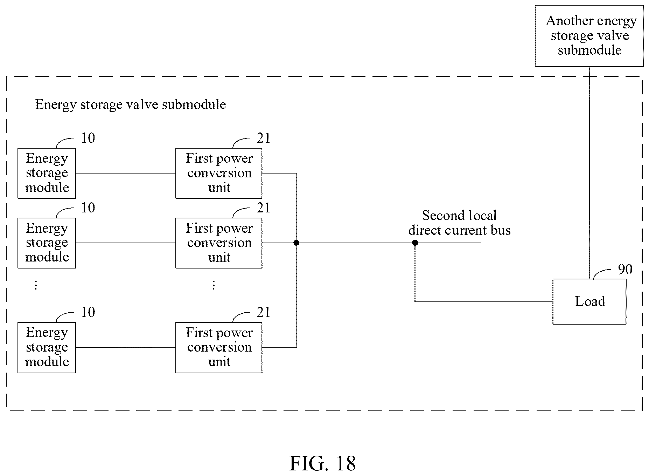

According to some embodiments of this application, optionally, referring to FIG. 18, FIG. 18 is a schematic structural diagram of an energy storage valve submodule according to another embodiment of this application. For ease of explanation, only the parts relevant to this embodiment are shown, with details as follows:
In addition to all the components and assemblies of the energy storage valve submodule shown in FIG. 17, the energy storage valve submodule further includes a second local direct current bus.

The second local direct current bus is connected to the plurality of first power conversion units 21.

It should be noted that the energy storage module 10 is configured to output a first sub-direct current; the first power conversion unit 21 is configured to convert the first sub-direct current to output a second sub-direct current; and the plurality of second sub-direct currents are combined and transmitted to the second local direct current bus to output a second local direct current.

The direct current output sides of the plurality of first power conversion units 21 in the plurality of electrical cabinets are connected in parallel to form the second local direct current bus. It can be understood that the stronger the consistency of the input and output characteristics of each first power conversion unit 21, the stronger the ability to directly connect the direct current output sides in parallel.

By providing the second local direct current bus, simultaneous power supply to a plurality of loads is achieved.

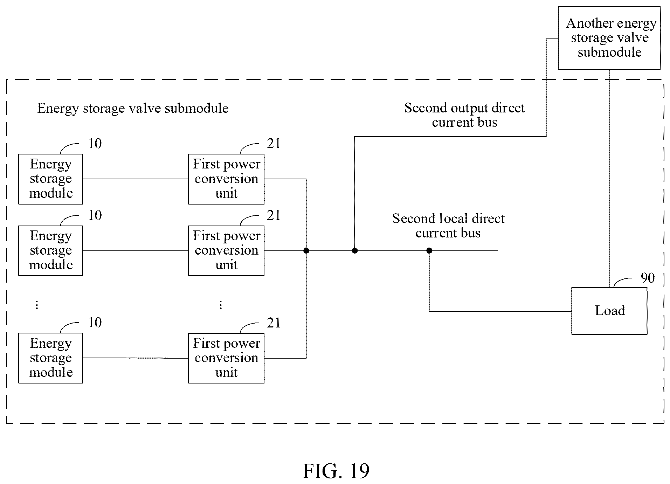

According to some embodiments of this application, optionally, referring to FIG. 19, FIG. 19 is a schematic structural diagram of an energy storage valve submodule according to another embodiment of this application. For ease of explanation, only the parts relevant to this embodiment are shown, with details as follows:
In addition to all the components and assemblies of the energy storage valve submodule shown in FIG. 18, the energy storage valve submodule further includes a second output direct current bus.

The second output direct current bus is connected to the plurality of first power conversion units 21.

It should be noted that the plurality of second sub-direct currents are also transmitted to the second output direct current bus to output a second standby direct current to the another energy storage valve submodule.

By providing the second output direct current bus connected to the plurality of first power conversion units, the plurality of second sub-direct currents output from the plurality of first power conversion units are transmitted to the second output direct current bus to supply power to the load connected to the another energy storage valve submodule.

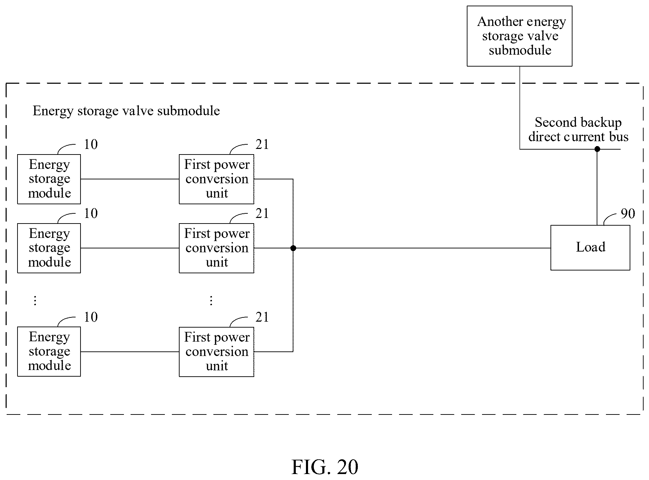

According to some embodiments of this application, optionally, referring to FIG. 20, FIG. 20 is a schematic structural diagram of an energy storage valve submodule according to another embodiment of this application. For ease of explanation, only the parts relevant to this embodiment are shown, with details as follows:
In addition to all the components and assemblies of the energy storage valve submodule shown in FIG. 17, the energy storage valve submodule further includes a second standby direct current bus; where
the load 90 is connected to another energy storage valve submodule via the second standby direct current bus.

It should be noted that the second standby direct current bus is used to receive the second standby direct current output from the another energy storage valve submodule. The load 90 may be powered by the second standby direct current. The second standby direct current bus may be connected to a plurality of loads 90.

By providing the second standby direct current bus, the second standby direct current output from the another energy storage valve submodule is connected to supply power to the load 90.

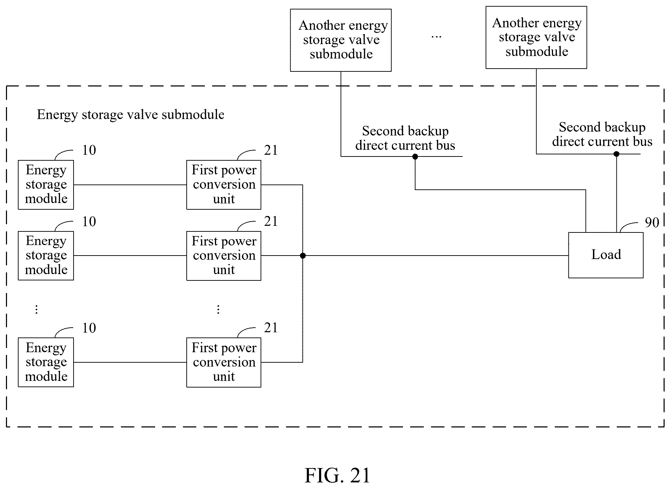

According to some embodiments of this application, optionally, referring to FIG. 21, FIG. 21 is a schematic structural diagram of an energy storage valve submodule according to another embodiment of this application. For ease of explanation, only the parts relevant to this embodiment are shown, with details as follows:
In addition to all the components and assemblies of the energy storage valve submodule shown in FIG. 20, the second standby direct current bus is provided in plurality; where
the plurality of second standby direct current buses are connected to a plurality of another energy storage valve submodules and the load 90.

It should be noted that the plurality of second standby direct current buses are used to receive a plurality of second standby direct currents output from the plurality of another energy storage valve submodules; and the load 90 may be powered by the plurality of second standby direct currents. The plurality of second standby direct current buses may be connected to a plurality of loads 90.

By providing the plurality of second standby direct current buses, a plurality of second standby direct currents output from the plurality of another energy storage valve submodules are connected to supply power to the load 90, further enhancing the reliability of the energy storage valve submodule.

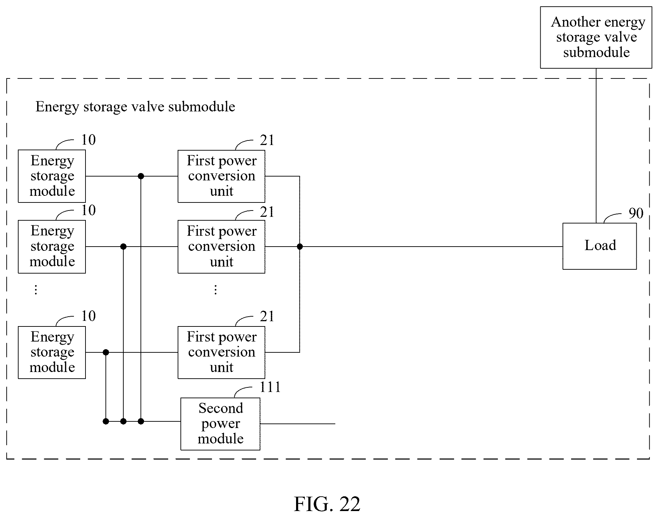

According to some embodiments of this application, optionally, referring to FIG. 22, FIG. 22 is a schematic structural diagram of an energy storage valve submodule according to another embodiment of this application. For ease of explanation, only the parts relevant to this embodiment are shown, with details as follows:
In addition to all the components and assemblies of the energy storage valve submodule shown in FIG. 17, the energy storage valve submodule further includes a second power module 111.

The second power module 111 is connected between the plurality of energy storage modules 10 and a power grid and is configured to perform charge-discharge switching for the plurality of energy storage modules 10.

The second power module 111 performs direct current relaying or conversion to enable the power grid to charge the energy storage modules 10 or the energy storage modules 10 to discharge to the power grid.

By providing the second power module 111, the energy storage valve submodule is connected to the power grid, thereby enabling energy conversion between the energy storage modules 10 and the power grid.

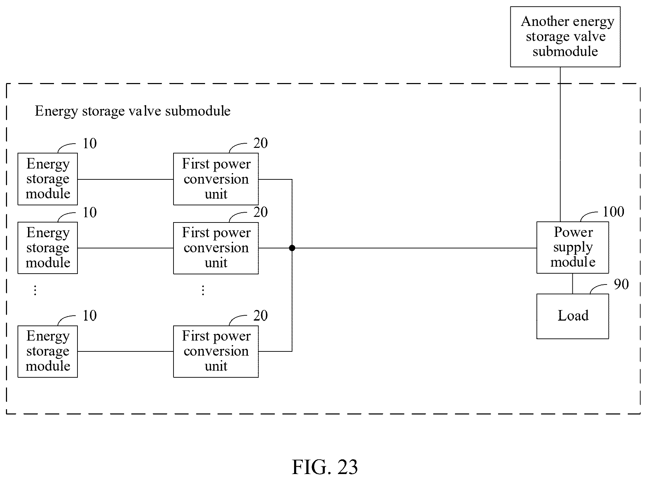

According to some embodiments of this application, optionally, referring to FIG. 23, FIG. 23 is a schematic structural diagram of an energy storage valve submodule according to another embodiment of this application. For ease of explanation, only the parts relevant to this embodiment are shown, with details as follows:

In addition to all the components and assemblies of the energy storage valve submodule shown in FIG. 17, the energy storage valve submodule further includes a power supply module 100.

The power supply module 100 is connected between the load 90 and the plurality of first power conversion units 21; and/or
the power supply module 100 is connected between the load 90 and another energy storage valve submodule.

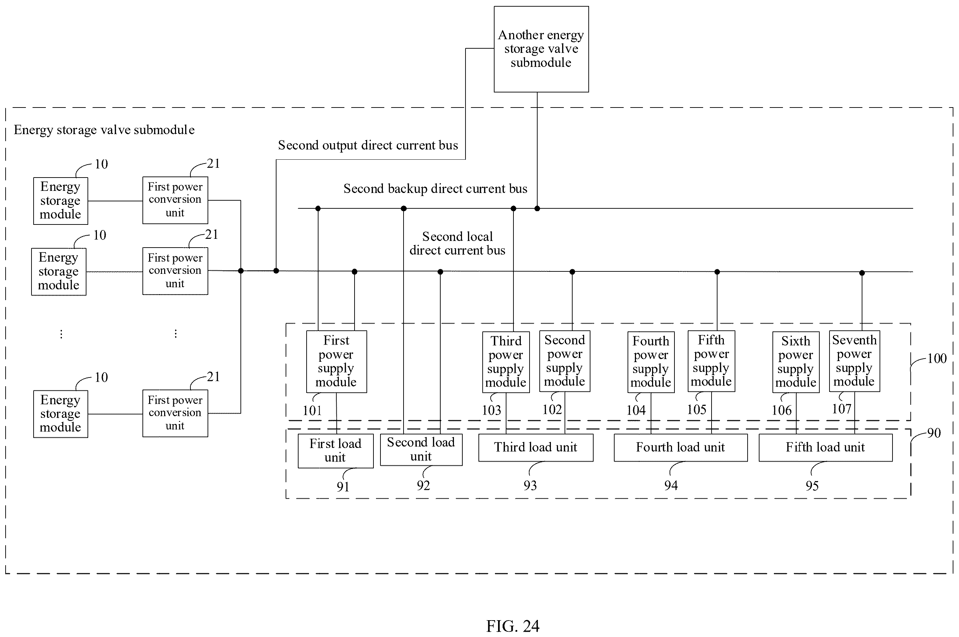

As an example and not a limitation, as shown in FIG. 24, the load 90 includes at least one of a first load unit 91, a second load unit 92, a third load unit 93, a fourth load unit 94, and a fifth load unit 95.

The first load unit 91 is connected to a first power supply module 101, and the first power supply module 101 is configured to convert a second local direct current or a second standby direct current output from the another energy storage valve submodule to output a first supply voltage; and the first load unit 91 is powered based on a first supply voltage. It should be noted that, during normal operation, the first load unit 91 is powered by the second local direct current bus; under the condition that the local energy storage valve submodule is bypassed and/or the voltage of a local energy storage module is below a threshold, the another energy storage valve submodule supplies power to the first load unit 91 via the second standby direct current bus.

The second load unit 92 is configured to be powered based on a second local direct current or a second standby direct current output from the another energy storage valve submodule. It should be noted that, under the condition that the supply voltage of the second load unit 92 matches the voltages of the second local direct current bus and the second standby direct current bus, no voltage conversion is required, and power can be directly extracted from a second local direct current bus and a second standby direct current bus. During normal operation of the local energy storage valve submodule, the second load unit is powered by the second local direct current bus. Under the condition that the local energy storage valve submodule is bypassed and/or the voltage of a local energy storage module is below a threshold, the another energy storage valve submodule supplies power to the second load unit 92 via the second standby direct current bus.

The third load unit 93 is connected to a second power supply module 102 and a third power supply module 103, the second power supply module 102 is configured to convert a second local direct current to output a second supply voltage; the third power supply module 103 is configured to convert a second standby direct current output from the another energy storage valve submodule to output a third supply voltage; and the third load unit 93 is powered based on a second supply voltage or a third supply voltage. It should be noted that, during normal operation, the third load unit 93 is powered by the second local direct current bus; under the condition that the second power supply module 102 fails, the local energy storage valve submodule is bypassed, and/or the voltage of a local energy storage module is below a threshold, the another energy storage valve submodule supplies power to the third load unit 93 via the second standby direct current bus.

The fourth load unit 94 is connected to a fourth power supply module 104 and a fifth power supply module 105. The fourth power supply module 104 is configured to convert a first direct current output from the second power module corresponding to a local energy storage valve submodule to output a fourth supply voltage; the fifth power supply module 105 is configured to convert a second local direct current to output a fifth supply voltage; and the fourth load unit 94 is powered based on a fourth supply voltage or a fifth supply voltage. It should be noted that the fourth load unit 94 is generally an internal load of the second power module. During normal operation of the local energy storage valve submodule, the fourth load unit 94 is powered by the fourth power supply module 104, and after the fourth power supply module 104 fails, the fifth power supply module 105 can supply power to the fourth load unit 94.

The fifth load unit 95 is connected to a sixth power supply module 106 and a seventh power supply module 107. The sixth power supply module 106 is configured to convert a second direct current output from the energy storage module corresponding to a local energy storage valve submodule to output a sixth supply voltage; the seventh power supply module 107 is configured to convert a second local direct current to output a seventh supply voltage; and the fifth load unit 95 is powered based on a sixth supply voltage or a seventh supply voltage. It should be noted that the fifth load unit 95 is generally applicable to internal equipment of the energy storage module. During normal operation of the local energy storage valve submodule, the fifth load unit 95 is powered by the sixth power supply module 106. Under the condition that the sixth power supply module 106 fails, the local energy storage valve submodule is bypassed, and/or the voltage of the energy storage module is below a threshold, the second standby direct current bus supplies power to the fifth load unit 95 via the seventh power supply module 107.

By adopting the foregoing solution, the power supply module 100 is provided to convert a direct current supplied to the load, enhancing the compatibility of the energy storage valve submodule.

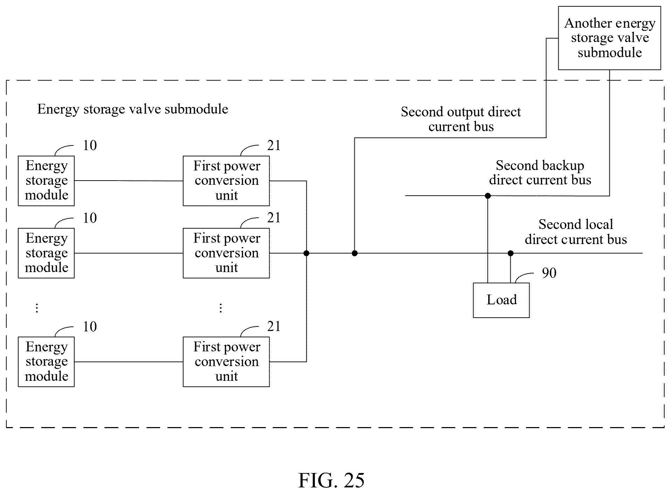

According to some embodiments of this application, optionally, referring to FIG. 25, FIG. 25 is a schematic structural diagram of an energy storage valve submodule according to another embodiment of this application. For ease of explanation, only the parts relevant to this embodiment are shown, with details as follows:

In addition to all the components and assemblies of the energy storage valve submodule shown in FIG. 17, the energy storage valve submodule further includes a second local direct current bus, a second output direct current bus, and a second standby direct current bus; where
the plurality of first power conversion units 21 are connected to the plurality of energy storage modules 10, and the first power conversion unit 21 is configured to convert a first sub-direct current to output a second sub-direct current.

The plurality of second sub-direct currents are transmitted to the second local direct current bus to output a second local direct current.

The plurality of second sub-direct currents are also transmitted to the second output direct current bus to output a second standby direct current to the another energy storage valve submodule.

The second standby direct current bus is used to receive the second standby direct current output from the another energy storage valve submodule.

The operating mode of the energy storage valve submodule shown in FIG. 25 is specifically as follows:
Each energy storage module 10 outputs respective first sub-direct current; each first power conversion unit 21 converts each first sub-direct current to output each second sub-direct current; each second sub-direct current is transmitted to the second local direct current bus to output a second local direct current; each second sub-direct current is also transmitted to the second output direct current bus to output a second standby direct current to another energy storage valve submodule; and the second standby direct current bus receives the second standby direct current output from the another energy storage valve submodule.

Since the energy storage valve submodule includes the second standby direct current bus and the second local direct current bus, under the condition that power extraction from the second local direct current bus fails, power can be extracted via the redundant second standby direct current, achieving a plurality of power extraction methods, reducing the failure rate of the energy storage valve submodule, and enhancing reliability. Moreover, under the condition that the energy storage valve submodule is bypassed due to a fault, power can be extracted solely via the second standby direct current bus, and the energy storage valve submodule is supplied by the energy storage module corresponding to the another energy storage valve submodule, thereby reducing the likelihood of battery performance degradation, thermal runaway of the energy storage module, and temporary shutdown for maintenance of the energy storage valve due to over-discharge of the local energy storage module.

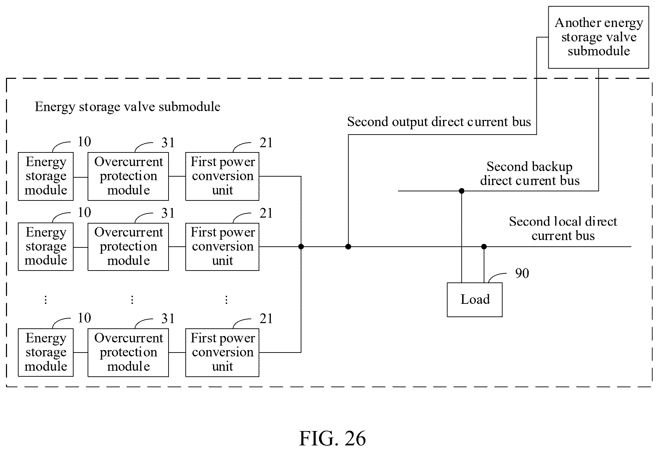

According to some embodiments of this application, optionally, referring to FIG. 26, FIG. 26 is a schematic structural diagram of an energy storage valve submodule according to another embodiment of this application. For ease of explanation, only the parts relevant to this embodiment are shown, with details as follows:

In addition to all the components and assemblies of the energy storage valve submodule shown in FIG. 25, the energy storage valve submodule further includes a plurality of overcurrent protection modules 31.

The plurality of overcurrent protection modules 31 are connected in one-to-one correspondence between the plurality of first power conversion units 21 and the plurality of energy storage modules 10, and the energy storage module 10 is configured to generate a first sub-direct current; and the overcurrent protection module 31 is configured to perform overcurrent protection on the first sub-direct current; and
the first power conversion unit 21 is specifically configured to convert the overcurrent-protected first sub-direct current to output a second sub-direct current.

In specific implementation, the overcurrent protection module 31 may include a first fuse and a second fuse. The first fuse is connected between a positive electrode of the energy storage module 10 and the first power conversion unit 21; and the second fuse is connected between a negative electrode of the energy storage module 10 and the first power conversion unit 21.

By providing the overcurrent protection module 31, when the current of the first sub-direct current exceeds a current threshold, the connection between the first power conversion unit 21 and the energy storage module 10 is disconnected, enhancing the reliability and safety of the energy storage valve submodule.

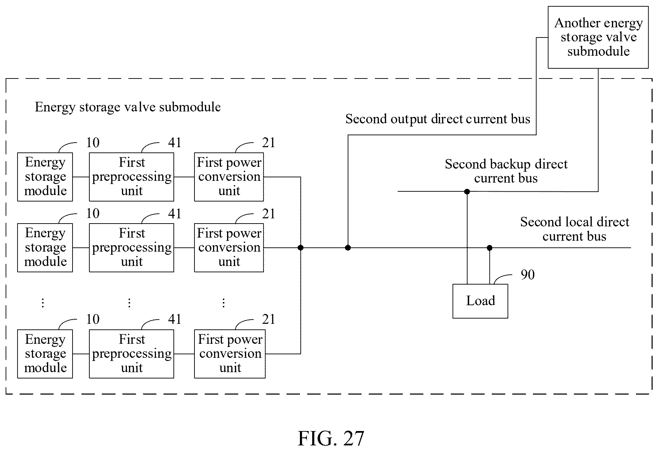

According to some embodiments of this application, optionally, referring to FIG. 27, FIG. 27 is a schematic structural diagram of an energy storage valve submodule according to another embodiment of this application. For ease of explanation, only the parts relevant to this embodiment are shown, with details as follows:
In addition to all the components and assemblies of the energy storage valve submodule shown in FIG. 25, the energy storage valve submodule further includes a plurality of first preprocessing units 41.

The plurality of first preprocessing units 41 are connected in one-to-one correspondence between the plurality of first power conversion units 21 and the plurality of energy storage modules 10, and the energy storage module 10 is configured to generate a first sub-direct current; and the first preprocessing unit 41 is configured to perform interference suppression on the first sub-direct current; and
the first power conversion unit 21 is specifically configured to convert the interference-suppressed first sub-direct current to output a second sub-direct current.

As an example and not a limitation, interference suppression includes at least one of voltage stabilization and filtering; and the first preprocessing unit 41 includes at least one of a first voltage stabilization module and a first filtering module. The first voltage stabilization module is configured to stabilize the first sub-direct current; and the first filtering module is configured to filter the first sub-direct current.

By providing the first preprocessing unit 41, spike voltages in the first sub-direct current output from the energy storage module 10 are removed, enhancing the reliability and stability of the energy storage valve submodule.

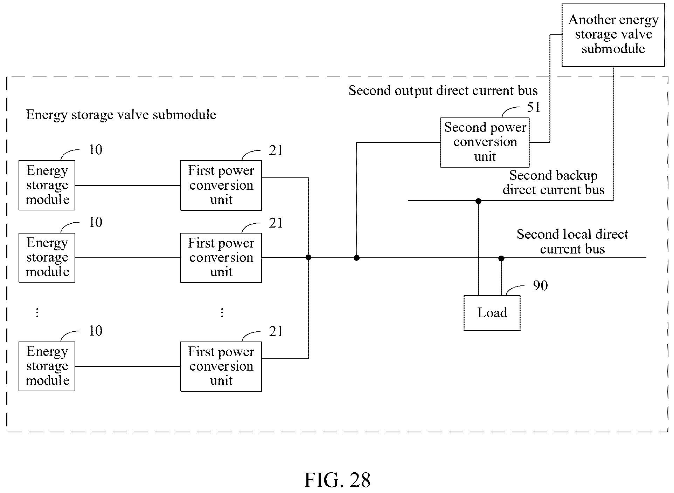

According to some embodiments of this application, optionally, referring to FIG. 28, FIG. 28 is a schematic structural diagram of an energy storage valve submodule according to another embodiment of this application. For ease of explanation, only the parts relevant to this embodiment are shown, with details as follows:
In addition to all the components and assemblies of the energy storage valve submodule shown in FIG. 25, the energy storage valve submodule further includes a second power conversion unit 51.

The second power conversion unit 51 is connected between the plurality of first power conversion units 21 and the second output direct current bus, and configured to convert a second standby direct current to output the converted second standby direct current to another energy storage valve submodule.

The second power conversion unit 51 is connected to the plurality of first power conversion units 21 to receive the local second standby direct current, converts the local second standby direct current to output the converted local second standby direct current to the another energy storage valve submodule via the second output direct current bus, thereby constructing the second standby direct current bus for the another energy storage valve submodule.

The second power conversion unit 51 can achieve DC-DC unidirectional/bidirectional energy conversion to adapt to the required voltage level of the second output direct current bus. To meet insulation requirements, the second power conversion unit 51 may include an internal isolation transformer.

By providing the second power conversion unit 51, voltage conversion of the local second standby direct current is achieved, enhancing the compatibility of the energy storage valve submodule.

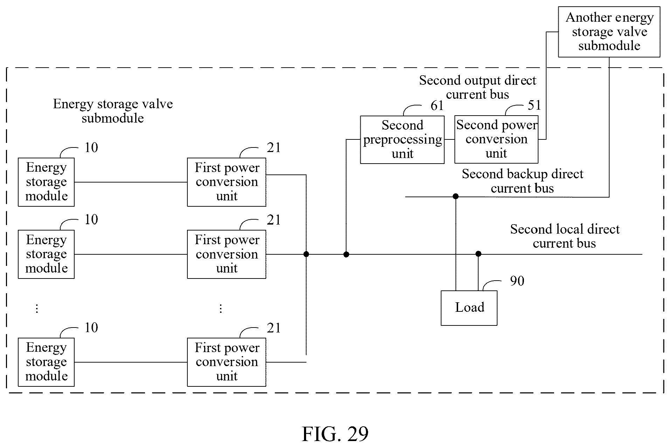

According to some embodiments of this application, optionally, referring to FIG. 29, FIG. 29 is a schematic structural diagram of an energy storage valve submodule according to another embodiment of this application. For ease of explanation, only the parts relevant to this embodiment are shown, with details as follows:
In addition to all the components and assemblies of the energy storage valve submodule shown in FIG. 28, the energy storage valve submodule further includes a second preprocessing unit 61.

The second preprocessing unit 61 is connected between the plurality of first power conversion units 21 and the second power conversion unit 51, and configured to perform interference suppression on the second standby direct current; and
the second power conversion unit 51 is specifically configured to convert the interference-suppressed second standby direct current to output the converted second standby direct current to another energy storage valve submodule.

As an example and not a limitation, interference suppression includes at least one of voltage stabilization and filtering; and the second preprocessing unit 61 includes at least one of a second voltage stabilization module and a second filtering module. The second voltage stabilization module is configured to stabilize the second standby direct current; and the second filtering module is configured to filter the second standby direct current.

By providing the second preprocessing unit 61, spike voltages in the local second standby direct current are removed, enhancing the reliability and stability of the energy storage valve submodule.

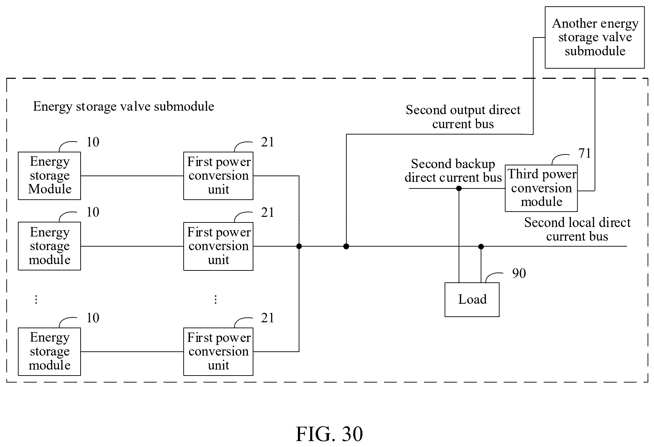

According to some embodiments of this application, optionally, referring to FIG. 30, FIG. 30 is a schematic structural diagram of an energy storage valve submodule according to another embodiment of this application. For ease of explanation, only the parts relevant to this embodiment are shown, with details as follows:
In addition to all the components and assemblies of the energy storage valve submodule shown in FIG. 25, the energy storage valve submodule further includes a third power conversion unit 71.

The third power conversion unit 71 is connected between another energy storage valve submodule and the second standby direct current bus, and configured to connect the second standby direct current output from the another energy storage valve submodule and convert the second standby direct current output from the another energy storage valve submodule to output the converted second standby direct current from the another energy storage valve submodule to the second standby direct current bus.

The third power conversion unit 71 can achieve DC-DC unidirectional/bidirectional energy conversion to adapt to the required voltage level of the second output direct current bus. To meet insulation requirements, the third power conversion unit 71 may include an internal isolation transformer.

By providing the third power conversion unit 71, voltage conversion of the second standby direct current output from the another energy storage valve submodule is achieved, enhancing the compatibility of the energy storage valve submodule.

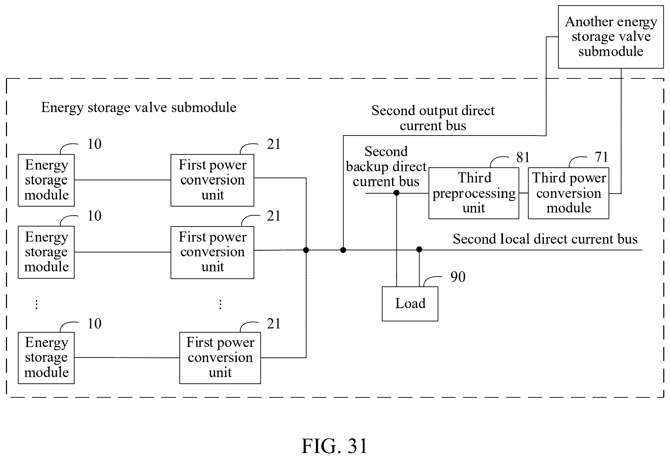

According to some embodiments of this application, optionally, referring to FIG. 31, FIG. 31 is a schematic structural diagram of an energy storage valve submodule according to another embodiment of this application. For ease of explanation, only the parts relevant to this embodiment are shown, with details as follows:
In addition to all the components and assemblies of the energy storage valve submodule shown in FIG. 25, the energy storage valve submodule further includes a third preprocessing unit 81.

The third preprocessing unit 81 is connected between another energy storage valve submodules and the third power conversion unit 71, and configured to connect the second standby direct current output from the another energy storage valve submodule and perform interference suppression on the second standby direct current output from the another energy storage valve submodule; and
the third power conversion unit 71 is specifically configured to convert the interference-suppressed second standby direct current output from the another energy storage valve submodule to output the converted second standby direct current from the another energy storage valve submodule to the second standby direct current bus.

As an example and not a limitation, interference suppression includes at least one of voltage stabilization and filtering; and the third preprocessing unit 81 includes at least one of a third voltage stabilization module and a third filtering module. The third voltage stabilization module is configured to stabilize the second standby direct current output from the another energy storage valve submodule; and the third filtering module is configured to filter the second standby direct current output from the another energy storage valve submodule.

By providing the third preprocessing unit 81, spike voltages in the second standby direct current output from the another energy storage valve submodule are removed, enhancing the reliability and stability of the energy storage valve submodule.

According to some embodiments of this application, this application further provides an energy storage valve including the energy storage valve submodule described above; where the energy storage valve submodule may be connected in series to a power grid.

Since the energy storage valve includes the energy storage valve submodule according to any one of the foregoing solutions, a plurality of power extraction sources can be achieved, reliability can be enhanced, and the likelihood of over-discharge of the energy storage module can be reduced. By connecting the energy storage valve submodule in series to the power grid, redundant standby of the energy storage valve submodule is achieved, enhancing the reliability of the energy storage valve, and increasing the energy storage capacity of the energy storage valve.

According to some embodiments of this application, this application further provides an energy storage station, including the energy storage valve submodule described above.

It should be noted that the energy storage station includes a plurality of energy storage valve submodules. The plurality of energy storage valve submodules are connected in series and/or in parallel.

Since the energy storage station includes the energy storage valve submodule according to any one of the foregoing solutions, a plurality of power extraction sources can be achieved, reliability can be enhanced, and the likelihood of over-discharge of the energy storage module can be reduced.

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of this application. However, these modifications or replacements do not make the essence of the corresponding technical solutions deviate from the scope of the technical solutions of the embodiments of this application, and they should all be included in the scope of the claims and description of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. An energy storage valve submodule, **characterized by** comprising an energy storage module and a load; wherein
the load is electrically connected to the energy storage module; and
the load is further electrically connected to another energy storage valve submodule.

2. The energy storage valve submodule according to claim 1, **characterized in that** the energy storage module is provided in one or plurality, wherein the plurality of energy storage modules are connected in series and/or in parallel.

3. The energy storage valve submodule according to claim 1, **characterized in that** the energy storage valve submodule comprises a first power conversion module; wherein
the first power conversion module is connected to the energy storage module via a main direct current bus, and the load is connected to the first power conversion module.

4. The energy storage valve submodule according to claim 3, **characterized in that** the energy storage valve submodule further comprises a first local direct current bus; wherein
the first local direct current bus is connected to the first power conversion module.

5. The energy storage valve submodule according to claim 3, **characterized in that** the energy storage valve submodule further comprises a first output direct current bus; wherein
the first output direct current bus is connected to the first power conversion module.

6. The energy storage valve submodule according to claim 1, **characterized in that** the energy storage valve submodule further comprises a first output direct current bus; wherein
the first output direct current bus is connected to a main direct current bus and another energy storage valve submodule.

7. The energy storage valve submodule according to claim 1, **characterized in that** the energy storage valve submodule further comprises a first standby direct current bus; and
the load is connected to another energy storage valve submodule via the first standby direct current bus.

8. The energy storage valve submodule according to claim 7, **characterized in that** the first standby direct current bus is provided in plurality; wherein
the plurality of first standby direct current buses are connected to a plurality of another energy storage valve submodules and the load.

9. The energy storage valve submodule according to any one of claims 1 to 8, **characterized in that** the energy storage valve submodule further comprises a first power module; wherein
the first power module is connected between the energy storage module and a power grid and is configured to perform charge-discharge switching for the energy storage module.

10. The energy storage valve submodule according to any one of claims 1 to 8, **characterized in that** the energy storage valve submodule further comprises a power supply module; wherein
the power supply module is connected between the load and the energy storage module; and/or
the power supply module is connected between the load and another energy storage valve submodule.

11. The energy storage valve submodule according to any one of claims 1 to 8, **characterized in that** the energy storage modules are disposed in respective electrical cabinets.

12. The energy storage valve submodule according to any one of claims 3 to 5, **characterized in that** the first power conversion module is disposed in a busbar cabinet.

13. The energy storage valve submodule according to claim 3, **characterized by** further comprising a first preprocessing module; wherein
the first preprocessing module is connected between the first power conversion module and the main direct current bus, and the first preprocessing module is configured to perform interference suppression on a first direct current; and
the first power conversion module is specifically configured to perform voltage conversion on the interference-suppressed first direct current to output a stable second direct current.

14. The energy storage valve submodule according to claim 5, **characterized by** further comprising:
a second power conversion module connected between the first power conversion module and the first output direct current bus, and configured to perform voltage conversion on a first standby direct current to output the converted first standby direct current to another energy storage valve submodule.

15. The energy storage valve submodule according to claim 14, **characterized by** further comprising:
a second preprocessing module connected between the first power conversion module and the second power conversion module, and configured to perform interference suppression on the first standby direct current; wherein
the second power conversion module is specifically configured to perform voltage conversion on the interference-suppressed first standby direct current to output the converted first standby direct current to another energy storage valve submodule.

16. The energy storage valve submodule according to claim 7, **characterized by** further comprising:
a third power conversion module connected between another energy storage valve submodule and the first standby direct current bus, configured to connect the first standby direct current output from another energy storage valve submodule, and perform voltage conversion on the first standby direct current output from the another energy storage valve submodule to output the converted first standby direct current from the another energy storage valve submodule to the first standby direct current bus.

17. The energy storage valve submodule according to claim 16, **characterized by** further comprising:
a third preprocessing module connected between another energy storage valve submodule and the third power conversion module, configured to connect the first standby direct current output from the another energy storage valve submodule, and perform interference suppression on the first standby direct current output from the another energy storage valve submodule; wherein
the third power conversion module is specifically configured to perform voltage conversion on the interference-suppressed first standby direct current output from the another energy storage valve submodule to output the converted first standby direct current from the another energy storage valve submodule to the first standby direct current bus.

18. The energy storage valve submodule according to claim 1, **characterized in that** the energy storage module is provided in plurality, and the energy storage valve submodule further comprises a plurality of first power conversion units; wherein
the plurality of energy storage modules are connected to the plurality of first power conversion units; and
the load is electrically connected to the plurality of first power conversion units.

19. The energy storage valve submodule according to claim 18, **characterized in that** the energy storage valve submodule further comprises a second local direct current bus; wherein
the second local direct current bus is connected to the plurality of first power conversion units.

20. The energy storage valve submodule according to claim 19, **characterized in that** the energy storage valve submodule further comprises a second output direct current bus; wherein
the second output direct current bus is connected to the plurality of first power conversion units.

21. The energy storage valve submodule according to claim 18, **characterized in that** the energy storage valve submodule further comprises a second standby direct current bus; wherein
the load is connected to another energy storage valve submodule via the second standby direct current bus.

22. The energy storage valve submodule according to claim 21, **characterized in that** the second standby direct current bus is provided in plurality; wherein
the plurality of second standby direct current buses are connected to the plurality of another energy storage valve submodules and the load.

23. The energy storage valve submodule according to claim 18, **characterized in that** the energy storage valve submodule further comprises a second power module; wherein
the second power module is connected between the plurality of energy storage modules and a power grid and is configured to perform charge-discharge switching for the energy storage modules.

24. The energy storage valve submodule according to claim 18, **characterized in that** the energy storage valve submodule further comprises a power supply module; wherein
the power supply module is connected between the load and the plurality of first power conversion units; and/or
the power supply module is connected between the load and another energy storage valve submodule.

25. The energy storage valve submodule according to claim 18, **characterized by** further comprising a plurality of overcurrent protection modules: wherein
the plurality of overcurrent protection modules are connected in one-to-one correspondence between the plurality of first power conversion units and the plurality of energy storage modules, and the energy storage module is configured to generate a first sub-direct current;
the overcurrent protection module is configured to perform overcurrent protection on the first sub-direct currents; and
the first power conversion unit is specifically configured to convert the overcurrent-protected first sub-direct current to output a second sub-direct current.

26. The energy storage valve submodule according to claim 18, **characterized by** further comprising a plurality of first preprocessing units, wherein
the plurality of first preprocessing units are connected in one-to-one correspondence between the plurality of first power conversion units and the plurality of energy storage modules, and the energy storage module is configured to generate a first sub-direct current;
the first preprocessing unit is configured to perform interference suppression on the first sub-direct current; and
the first power conversion unit is specifically configured to convert the interference-suppressed first sub-direct current to output a second sub-direct current.

27. The energy storage valve submodule according to any one of claims 18 to 26, **characterized by** further comprising:
a second power conversion unit connected between the plurality of first power conversion units and the second output direct current bus, and configured to convert a second standby direct current to output the converted second standby direct current to another energy storage valve submodule.

28. The energy storage valve submodule according to claim 27, **characterized by** further comprising:
a second preprocessing unit connected between the plurality of first power conversion units and the second power conversion unit, and configured to perform interference suppression on the second standby direct current; wherein
the second power conversion unit is specifically configured to convert the interference-suppressed second standby direct current to output the converted second standby direct current to another energy storage valve submodule.

29. The energy storage valve submodule according to claim 21, **characterized by** further comprising:
a third power conversion unit connected between another energy storage valve submodule and the second standby direct current bus, and configured to connect a second standby direct current output from the another energy storage valve submodule and convert the second standby direct current output from the another energy storage valve submodule to output the converted second standby direct current from the another energy storage valve submodule to the second standby direct current bus.

30. The energy storage valve submodule according to claim 29, **characterized by** further comprising:
a third preprocessing unit connected between another energy storage valve submodule and the third power conversion unit, and configured to connect the second standby direct current output from the another energy storage valve submodule and perform interference suppression on the second standby direct current output from the another energy storage valve submodule; wherein
the third power conversion unit is specifically configured to convert the interference-suppressed second standby direct current output from the another energy storage valve submodule to output the converted second standby direct current from the another energy storage valve submodule to the second standby direct current bus.

31. The energy storage valve submodule according to any one of claims 1 to 30, **characterized in that** the load comprises a control circuit and/or a switch.

32. An energy storage valve, **characterized by** comprising the energy storage valve submodule according to any one of claims 1 to 31.

33. An energy storage station, **characterized by** comprising the energy storage valve submodule according to any one of claims 1 to 31.
